# EUROPÄISCHE PATENTSCHRIFT

(11) **EP 0 714 687 B1**
(45) Veröffentlichungstag und Bekanntmachung des Hinweises auf die Patenterteilung: **07.04.1999**
(21) Anmeldenummer: 95118363.1
(22) Anmeldetag: 22.11.1995
(51) Int. Cl.: B01D 25/127, B01D 25/172, B01D 25/32, B01D 25/30

(54) **Verfahren und Vorrichtung zum Entwässern von Schlämmen und ähnlichen Substanzen**
Process and apparatus for dewater of sludge and like substances
Procédé et appareil de déshydratation de bones et autres

(30) Priorität: 01.12.1994 DE 4442623; 24.10.1995 DE 19539484
(43) Veröffentlichungstag der Anmeldung: 05.06.1996
(73) Patentinhaber: Bähr, Albert, D-66564 Ottweiler (DE)
(72) Erfinder: Bähr, Albert, D-66564 Ottweiler (DE)
(74) Vertreter: Brose, D. Karl, Dipl.-Ing.

(56) Entgegenhaltungen:
- EP-A- 0 264 899
- EP-A- 0 396 079
- EP-A- 0 397 082
- EP-A- 0 407 884
- DE-A- 4 223 022

## Beschreibung

Die Erfindung betrifft ein Verfahren zum Entwässern von Schlämmen und ähnlichen Substanzen, bei dem der Schlamm unter Druck in mindestens eine Filterflächen aufweisende geschlossene Schlammkammer eingespeist und in der Schlammkammer ein die Entwässerung herbeiführender hydrostatischer Druck aufgebaut wird, wobei nach erfolgter Entwässerung zum Abfördern des hergestellten Filterkuchens die Schlammkammer geöffnet und die Filterflächen mit dem Filterkuchen aus der Schlammkammer herausbewegt werden.

Es ist allgemein bekannt, Schlämme und ähnliche Substanzen, beispielsweise den in Abwasserkläranlagen anfallenden Schlamm, nach Zusatz organischer oder anorganischer Flockungsmittel oder Filterhilfsmittel in Kammerfilterpressen zu entwässern. Bei Kammerfilterpressen der üblichen Bauart wird der Schlamm in allseitig geschlossene Filterkammern eingespeist und mittels Pumpen das zu entwässernde Medium mit hohem Druck so lange nachgepumpt, bis der gewünschte Gehalt an Trockensubstanz erreicht ist. Das in dem zu entwässernden Medium enthaltene Filtrat wird hierbei durch die aus Filtermaterial bestehenden Trennwandungen der einzelnen Filterkammern abgeführt. Nachteil bekannter Kammerfilterpressen dieser Bauart und der entsprechenden Verfahrensweise beim Entwässern ist es, daß bei sehr hohem technischen Aufwand der Wirkungsgrad, mit welchem der Druck auf die zu entwässernde Substanz übertragen wird, von Kammer zu Kammer in Förderrichtung abnimmt. Darüber hinaus wird der hydrostatische Entwässerungsdruck durch Pumpen aufgebaut, was den erheblichen Nachteil mit sich bringt, daß die durch die Flockungsmittel oder andere Filterhilfsmittel hergestellte Flockung des Schlamms beim Pumpen wieder zerstört wird. Ein weiterer Nachteil besteht in der diskontinuierlichen Arbeitsweise bekannter Kammerfilterpressen, da beim Öffnen der Schlammkammer die Schlammzufuhr unterbrochen werden muß. Darüber hinaus erfolgt die gesamte Entwässerung, einschließlich der Vorentwässerung bei niedrigem Druck, in der für hohe Drücke angelegten Kammer, so daß diese ausgesprochen unwirtschaftlich genutzt wird.

Um bei einer Kammerfilterpresse üblicher Bauart während des Druckaufbaus eine schonendere Förderung des geflockten Schlamms zu erreichen, ist hierzu gemäß der EP-A-0 407 884 eine Pumpenbauart vorgeschlagen, bei welcher zwei gegenläufige Kolbenpumpen verwendet werden. Hierbei soll der Druckhub der einen Pumpe beginnen, ehe die andere Pumpe ihren Druckhub beendet hat, um dadurch auf der Abförderseite der beiden Kolbenpumpen ein im wesentlichen gleichbleibendes Druckniveau zu erreichen. Für den Druckaufbau der an diese gegenläufigen Kolbenpumpen angeschlossenen Kammerfilterpresse üblicher Bauart, läuft diese bekannte Pumpe jedoch ebenfalls über einen längeren Zeitraum kontinuierlich.

Nach einem früheren Vorschlag des Anmelders ist ferner aus der EP-A-0 397 082 ein Verfahren und eine Filterpresse zum Entwässern von Schlamm und ähnlichen Substanzen bekannt, bei welchen der Schlamm in der Filterpresse in eine allseitig geschlossene Schlammkammer durch eine Pumpe gespeist wird und ein hydrostatischer Druck festlegbaren Niveaus aufgebaut wird. Anschließend wird die Schlammkammer gegenüber der Pumpe getrennt und das Volumen der Schlammkammer verkleinert, um einen mechanischen Entwässerungsdruck zu erzeugen. Bei diesem bekannten Verfahren und der dazugehörigen Filterpresse wird jedoch der Druck ebenfalls durch eine übliche Pumpe aufgebaut, die während der gesamten Phase des Aufbaus hydrostatischen Drucks kontinuierlich laufen muß. Hierdurch ist eine schonende Behandlung des geflockten Schlamms leider nicht möglich. Ferner wird bei dieser bekannten Filterpresse der mechanische Entwässerungsdruck durch eine Druckmembran erzeugt. Da die nach diesem früheren Vorschlag des Anmelders bekannte Filterpresse diskontinuierlich arbeitet, wird eine quasi kontinuierliche Arbeitsweise dadurch erreicht, daß an die Pumpe drei Filterkammern angeschlossen sind, welche alternierend zueinander betrieben werden, so daß die Pumpe zwar kontinuierlich fördert, jedoch nur jeweils eine der Filterpressen versorgt, während die beiden anderen entweder im Zustand der Erzeugung des mechanischen Entwässerungsdrucks oder im Zustand des Austragens des Filterkuchens befindlich sind.

Nach einem weiteren früheren Vorschlag des Anmelders ist gemäß der DE-A-42 23 022 eine Filterpresse bekannt, die ebenfalls durch eine Pumpe üblicher Bauart beschickt wird, um einen festlegbaren hydrostatischen Druck in der Schlammkammer aufzubauen. Bei der Bauart der hiernach bekannten Filterpresse wird eine mit Druck beaufschlagbare Doppelmembran verwendet, um das Volumen der Schlammkammer zu verkleinern, und einen zusätzlichen Druck auf den Filterkuchen auszuüben. Somit weist die bekannte Filterpresse praktisch nur einen beweglichen Teil auf, nämlich Tragrahmen für die Doppelmembran, welcher zum Austragen des Filterkuchens und erneutem Schließen der Schlammkammer bewegt wird. Hinsichtlich einer quasi kontinuierlichen Arbeitsweise und der Behandlung des geflockten Schlamms gilt grundsätzlich das gleiche wie bereits oben zu der EP-A-0 397 082 ausgeführt.

Ausgehend von diesem Stand der Technik liegt der Erfindung die Aufgabe zugrunde, ein völlig neuartiges Entwässerungsverfahren und eine zur Durchführung dieses Verfahrens geeignete Vorrichtung zu schaffen, bei welchem während des Aufbaus des hydrostatischen Drucks die Flockung des Schlamms nicht zerstört wird, und bei welchem bei geringem technischem Aufwand ein erheblich verbesserter Wirkungsgrad und darüber hinaus ein wesentlich verbesserter Durchsatz gewährleistet ist.

Bei einem Verfahren der eingangs genannten Art wird diese Aufgabe im wesentlichen dadurch gelöst, daß der Schlamm in mindestens einen mit der Schlammkammer in Verbindung stehenden Zwischenbehälter eingebracht wird, daß der Zwischenbehälter eine Schlammenge aufnimmt, die etwa dem Zweifachen des Volumens der Schlammkammer entspricht, daß danach die Schlammzufuhr zum Zwischenbehälter getrennt wird, daß anschließend der die Schlammkammer durch positive Verdrängung eines Schlammvolumens aus dem Zwischenbehälter gefüllt wird, daß nach dem Füllen der Schlammkammer der hydrostatische Druck durch positive Verdrängung des das Volumen der Schlammkammer übersteigenden Teils der zweiten Füllung des Zwischenbehälters erzeugt wird und daß hierbei je nach spezifischem Entwässerungsverhalten des Schlamms ein hydrostatischer Druck von etwa 5 bis 10 bar erzeugt wird. Es ist offensichtlich, daß hierbei mit einfachsten Mitteln, nämlich eines Zwischenbehälters, welcher eine positive Volumenverdrängung ermöglicht, indem beispielsweise der Zwischenbehälter als Kolbenzylindereinrichtung ausgebildet ist, auf ausgesprochen schonende Weise der hydrostatische Entwässerungsdruck aufgebaut werden kann, ohne daß der geflockte Schlamm mechanisch derart beeinflußt wird, daß die Flockung zerstört werden könnte.

Bei eine besonders bevorzugten Ausführungsform nach der Erfindung erfolgt die Schlammzufuhr zu dem Zwischenbehälter über einen Ausgleichsbehälter, welcher kontinuierlich mit Schlamm befüllt wird, wobei in dem Ausgleichsbehälter gleichzeitig eine Vorentwässerung des Schlamms durchgeführt wird und wobei der Schlamm in die Schlammkammer an mehreren Punkten gleichzeitig aus einer der Anzahl dieser Punkte entsprechenden Anzahl von Zwischenbehältern eingeleitet wird. Hierdurch wird einerseits der Vorteil einer quasi kontinuierlichen Arbeitsweise erreicht, indem zumindest die Schlammzufuhr kontinuierlich erfolgen kann. Eine derartige Vorentwässerung stellt auf dem Gebiet der Kammerfilterpressen und der damit verbundenen Verfahrensweise etwas völlig Neuartiges dar und bietet den Vorteil, daß hierdurch die Entwässerungsleistung erheblich gesteigert wird, indem die angestrebten Trockensubstanzgehalte in kürzeren Arbeitszyklen erreicht werden, da die Schlammkammer mit bereits einen höheren Trockensubstanzgehalt aufweisenden Schlamm beschickt wird. Im Gegensatz zum Stand der Technik, bei welchem die verschiedenen Entwässerungsstufen nacheinander innerhalb der gleichen Kammer durchgeführt werden, arbeiten erfindungsgemäß die Stufen parallel zueinander, wodurch einerseits eine erhebliche Verkürzung der Zykluszeit in der Schlammkammer erreicht wird und andererseits die Durchsatzleistung stark vergrößert wird. Durch die Schlammeinspeisung an mehreren Punkten wird der angestrebte hydrostatische Druck vergleichsweise schnell erreicht, indem vermieden wird, daß der Filtrationsdruck durch die gesamte in der Kammer befindliche Substanz übertragen werden muß.

Bei einer besonders vorteilhaften Weiterbildung nach der Erfindung wird nach Erreichen eines festlegbaren hydrostatischen Drucks in der Schlammkammer diese von dem Zwischenbehälter getrennt und anschließend das Volumen der Schlammkammer verkleinert, wobei ein mechanischer Entwässerungsdruck erzeugt wird, welcher größer ist als der zuvor erreichte hydrostatische Druck. Auf diese Weise wird erreicht, daß ab dem Druckniveau, ab welchem eine weitere Entwässerung durch den hydrostatischen Druck nur mit entsprechend hohen Energiekosten und entsprechend hohem Aufwand konstruktiver Art sowie größerem Zeitaufwand möglich wäre, die dann von dem Druckbehälter getrennte Schlammkammer mechanisch zusammengedrückt wird, so daß eine weitere Entwässerung durch den mechanisch erzeugten Druck erfolgt.

Weiterer Gegenstand der Erfindung ist eine Vorrichtung zur Durchführung des oben beschriebenen Verfahrens mit mindestens einer seitlichen geschlossenen Schlammkammer, welche Filterflächen und einen Schlammeinlaß aufweist, welcher mit einer einem hydrostatischen Filtrationsdruck erzeugenden Einrichtung verbunden ist, wobei die Filterflächen zwischen relativ zueinander beweglichen Druckplatten angeordnet sind, und die Filterflächen zum Austragen des Filterkuchens nach dem Öffnen der Druckplatten bezüglich der Schlammkammer verschiebbar ausgebildet sind, wobei hierbei die der Erfindung zugrundeliegende Aufgabe im wesentlichen dadurch gelöst wird, daß die Einrichtung zur Erzeugung des hydrostatischen Filtrationsdrucks als ein oder mehrere Zwischenbehälter ausgebildet ist, daß der Zwischenbehälter als Kolbenzylindereinheit mit einem Zylindergehäuse und einem darin verschiebbaren Kolben sowie einem Antrieb für den Kolben ausgebildet ist, wobei jede Kolbenzylindereinheit einen Schlammeinlaß und einen mit der Schlammkammer in Verbindung stehenden Schlammauslaß aufweist, daß am Schlammeinlaß und am Schlammauslaß alternierend betätigbare Sperr- und Steuerventile vorgesehen sind und daß das Volumen des oder der Zwischenbehälter etwa dem zweifachen Volumen der Schlammkammer entspricht.

Eine besonders bevorzugte Ausführungsform besteht hierbei darin, daß die Schlammkammer mehrere Schlammeinlässe aufweist, daß eine entsprechende Anzahl von Zwischenbehältern vorgesehen ist, bei denen jeder Schlammeinlaß durch eine separate Verbindungsleitung mit einem der Schlammeinlässe der Schlammkammer verbunden ist und daß die Sperr- und Steuerventile als Kugelhähne ausgebildet sind. Hierdurch wird der Schlamm tatsächlich gleichmäßig an mehreren Punkten gleichzeitig in die Schlammkammer eingebracht, und der hydrostatische Entwässerungsdruck ebenfalls gleichmäßig und gleichzeitig von mehreren Punkten aus in der Schlammkammer aufgebaut. Ferner wird der geflockte Schlamm besonders schonend weiterbefördert, indem derartige Kugelhähne den vollen Leitungsquerschnitt bilden und daher für die Strömung keine Knick- oder Störstellen bieten, an denen die Flocken zerstört werden können.

Bei einer besonders bevorzugten Ausführungsform nach der Erfindung sind die Filterflächen durch geradlinig hin- und herverschiebbare Filterbänder gebildet. Hierdurch wird der Vorgang des aufwendigen Austragens des Schlammkuchens bei bekannten Kammerfilterpressen vermieden, indem die Filterbänder nach erfolgter Entwässerung den erhaltenen Preßkuchen seitlich aus der geöffneten Schlammkammer ausfahren können, wonach dann in einfachster Weise eine Reinigung der Filtertücher bei deren Rücklauf erfolgen kann, während diese wieder in die Schlammkammer eingefahren werden können.

Ferner ist es bevorzugt, daß die Schlammkammer durch eine obere und untere Filterfläche gebildet ist, zwischen denen eine die Schlammkammer umgebende flexible Dichtung angeordnet ist, daß die Dichtung an einem Hilfsrahmen befestigt ist, daß der Hilfsrahmen durch Mitnehmer beweglich an der oberen Druckplatte aufgehängt ist und daß die Schlammkammer einen ovalen Umriß aufweist. Hierdurch wird eine besonders einfache und wirksame Konstruktion einer taktweise offenen und geschlossenen betreibbaren Schlammkammer erreicht, wobei der ovale Umriß eine besonders günstige Verteilung des Drucks bezüglich der die Schlammkammer umgebenden Dichtung gewährleistet.

Im einzelnen ist es ferner bevorzugt, daß außerhalb der Schlammkammer jede Filterfläche auf einer Lagerplatte abgestützt ist, welche mit zur Filterfläche offenen Kanälen vorgesehen ist, daß die Schlammkammer mit den Filterflächen gegenüber der Horizontalen in Längsrichtung geneigt angeordnet ist, daß die Neigung einem Gefälle der Filterflächen von etwa 10° entspricht und daß die Kanäle zur Hauptachse der Schlammkammer parallel ausgebildet sind. Hierdurch wird eine schnelle und sichere Abführung des bei der Entwässerung entstehenden Filtrats auf der Außenseite der Filterflächen sowohl auf der Oberseite als auch auf der Unterseite der Schlammkammer erreicht.

Bei einer besonders bevorzugten Ausführungsform nach der Erfindung ist die untere Druckplatte auf Hochdruckerzeugern abgestützt, mittels derer das Volumen der Schlammkammer nach Erreichen des hydrostatischen Entwässerungsdrucks zur Erzeugung eines zusätzlichen, mechanischen Entwässerungsdrucks verkleinerbar ist.

Bei einer besonders bevorzugten Ausführungsform ist hierbei vorgesehen, daß die untere Druckplatte als hydraulisches Bett ausgebildet ist, indem nebeneinander eine Anzahl von Hochdruckerzeugern über die Länge und/oder Breite der unteren Druckplatte verteilt angeordnet sind, und daß die Hochdruckerzeuger in mehreren parallelen Reihen innerhalb des ovalen Umfangs der Schlammkammer angeordnet sind, wobei die Hochdruckerzeuger benachbarter Reihen gegeneinander versetzt sind.

Bei vorteilhaften alternativen Ausführungsformen nach der Erfindung können die Hochdruckerzeuger jeweils seitlich außerhalb des Bereichs der Schlammkammer angeordnet sein.

In vorteilhaften alternativen Ausführungsformen nach der Erfindung können die Hochdruckerzeuger jeweils seitlich außerhalb des Bereichs der Schlammkammer angeordnet sein.

In vorteilhafter Weise werden als Hochdruckerzeuger hydraulische Einfachzylinder verwendet.

Diese Ausführungsform bietet den Vorteil, daß sich die enormen Drücke mit vergleichsweise kostengünstigen Hochdruckerzeugern erzielen lassen, und daß gleichzeitig Biegespannungen vermieden werden, da der Hochdruck dort erzeugt wird, wo er benötigt wird, nämlich im Bereich der Flächenausdehnung der Schlammkammer selbst.

Bei einer besonders vorteilhaften Weiterbildung nach der Erfindung ist die geschlossene Stellung der Schlammkammer mechanisch verriegelt, wobei in vorteilhafter Weise zur Verriegelung eine auf die obere Druckplatte wirkende Sperrklinkenanordnung vorgesehen ist. Hierdurch wird der Vorteil erzielt, daß während der Entwässerung die Schlammkammer sicher und mit einfachsten Mitteln geschlossen gehalten wird, und die auftretenden Reaktionskräfte sicher aufgenommen werden.

Bei einer besonders bevorzugten Ausführungsform der Erfindung sind mehrere Schlammkammern übereinander angeordnet und zur jeweiligen Herstellung einer weiteren Schlammkammer ist zwischen der oberen und der unteren Druckplatte eine Zwischenplatte vorgesehen, welche auf ihrer Ober- und Unterseite je eine Lagerplatte und je ein Filterband aufweist, wobei ferner auf der Unterseite ein Hilfsrahmen mit Dichtung aufgehängt ist. Durch diese Art der Konstruktion läßt sich in Form einer modulartigen Bauweise entsprechend den jeweils vorliegenden Anforderungen an den Durchsatz eine nahezu beliebige Anzahl von Schlammkammern herstellen.

Im einzelnen ist es vorteilhaft, daß vor dem oder den Zwischenbehältern eine Vorentwässerungseinrichtung vorgesehen ist, deren Schlammauslaß mit dem Schlammeinlaß der Kolbenzylindereinheiten verbunden ist, daß die Vorentwässerungseinrichtung als Ausgleichsbehälter ausgebildet ist, dessen Einlaß an eine kontinuierliche Schlammzufuhr angeschlossen ist und daß die Vorentwässerungseinrichtung einen oder mehrere in den Schlamm des Ausgleichsbehälters eingetauchte Filterkörper aufweist, welche mit einem Filtratauslaß versehen sind.

Besonders bevorzugt ist es, daß der Filterkorb ortsfest angeordnet ist, und daß ein oder mehrere über die Höhe des Filterkorbs reichende Bürsten vorgesehen sind, welche auf der Filtratseite des Filterkorbs umlaufen. Durch die langsam umlaufenden Bürsten wird das Entwässerungsverhalten des Schlamms erheblich verbessert, ohne daß die Flockung zerstört wird, da die Bürsten auf der Filtratseite angeordnet sind.

Im einzelnen kann die Erfindung dadurch weitergebildet werden, daß zwischen den Druckplatten und/oder Zwischenplatten die Höhe der Schlammkammer festlegende Anschläge vorgesehen sind und daß die Anschläge entsprechend der Volumenverkleinerung der Schlammkammer (bzw. der hiermit verbundenen Verringerung der Höhe der Schlammkammer) zusammendrückbar und federnd ausgebildet sind. Dieses Merkmal ist besonders in Verbindung mit der mechanischen Verriegelung der geschlossenen Stellung der Schlammkammern von Vorteil, da hierdurch die geschlossene Stellung eindeutig definiert wird.

Ferner ist Gegenstand der Erfindung eine Dichtung zum seitlichen Abdichten einer in vertikaler Richtung im Volumen verkleinerbaren Druckkammer, wie sie im Einzelnen in den dieser Dichtung betreffenden Ansprüchen gekennzeichnet ist.

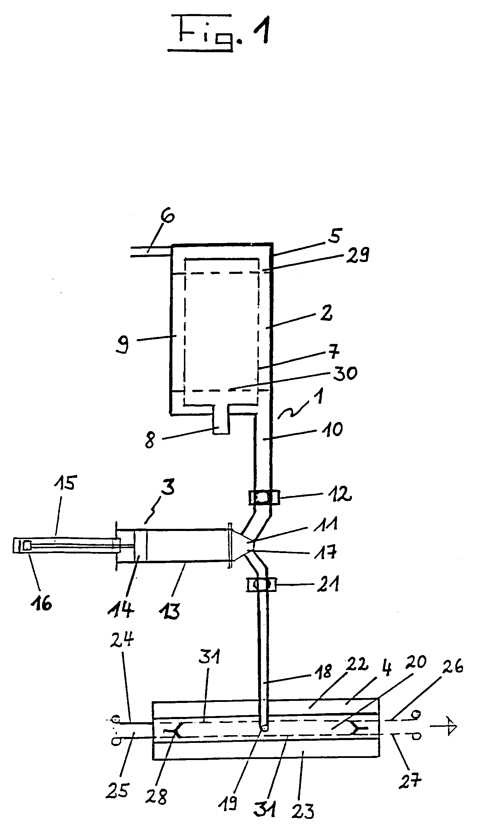

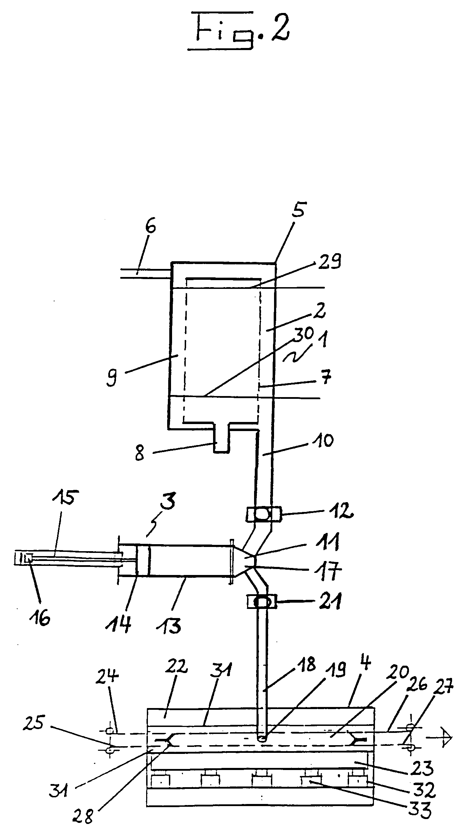

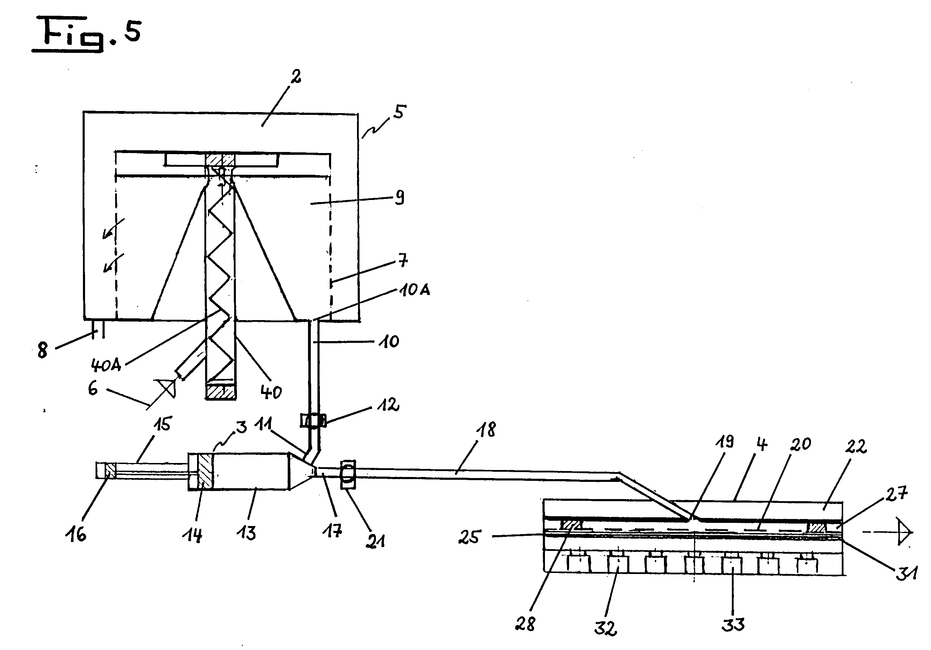

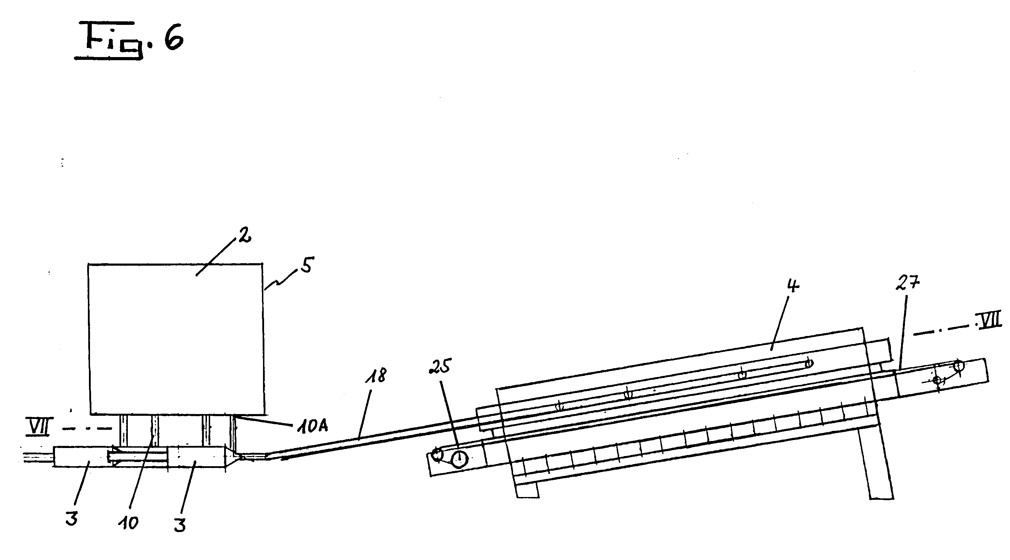

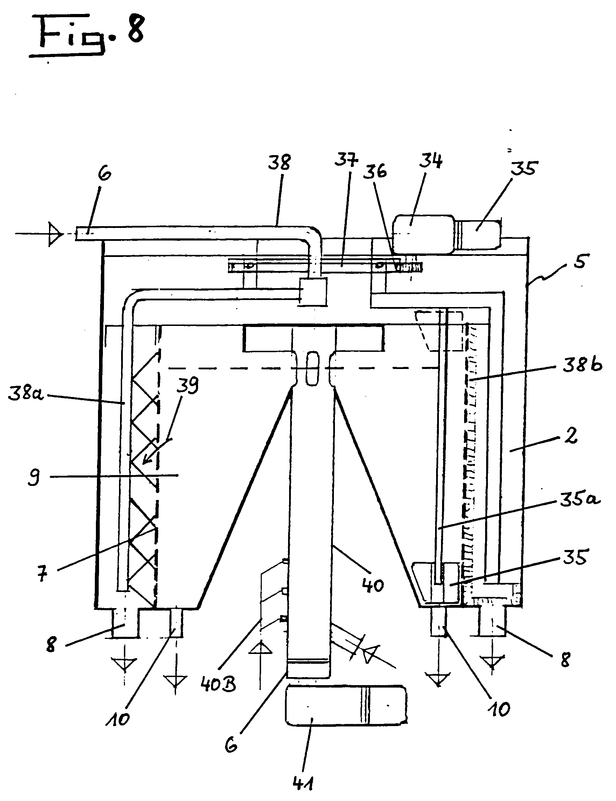

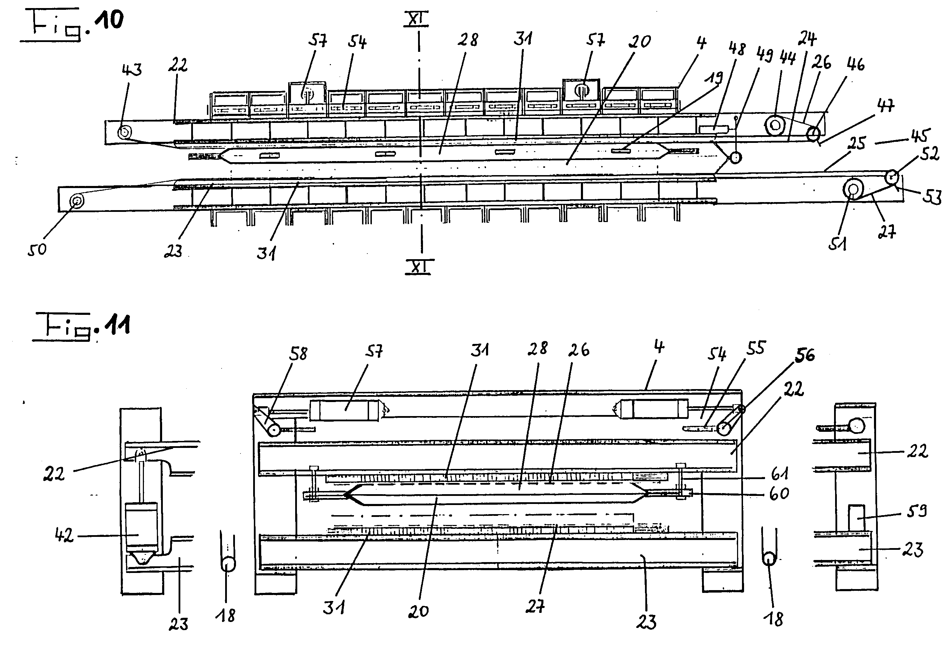

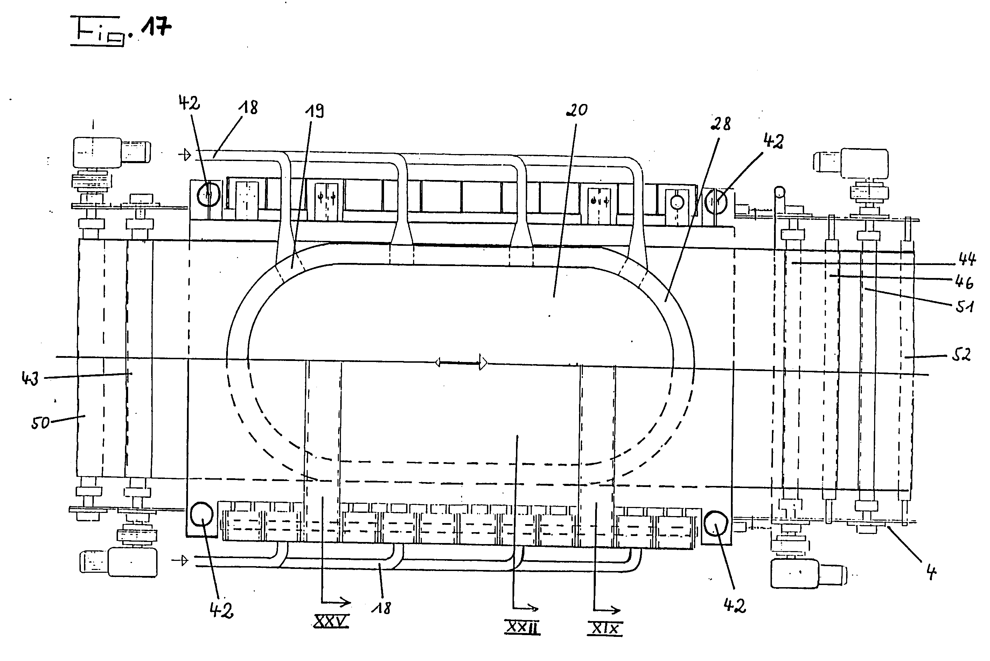

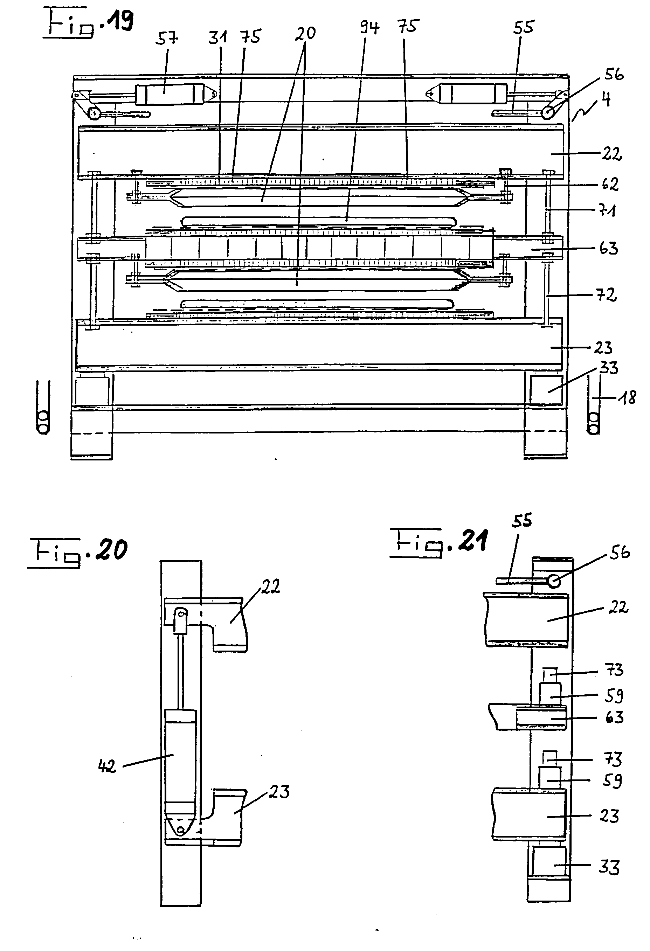

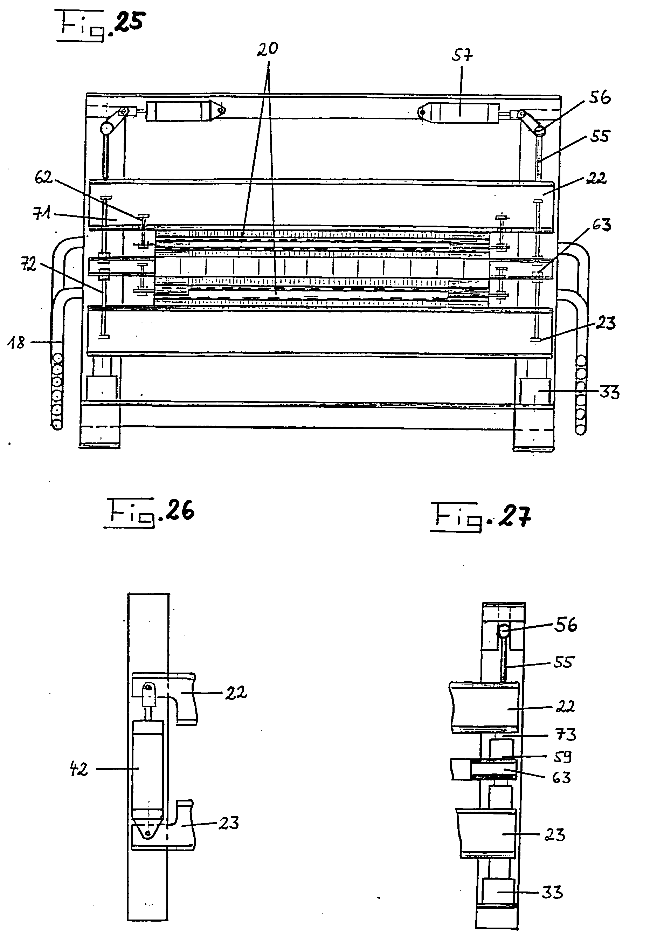

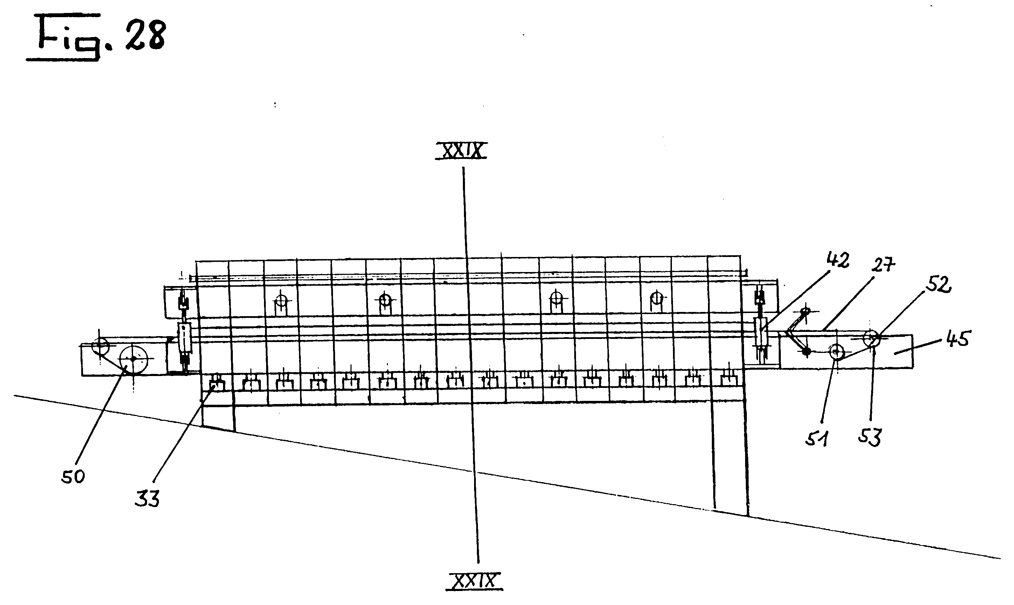

Im folgenden wird die Erfindung anhand von in den Zeichnungen beispielhaft veranschaulichten Ausführungsformen näher erläutert. Es zeigt:
**Fig. 1:**
   eine schematische Darstellung der Einzelteile der Vorrichtung nach der Erfindung zur Erläuterung des erfindungsgemäßen Verfahrens in einer ersten Ausführungsvariante nach Art einer Kammerfilterpresse,
**Fig. 2:**
   eine Figur 1 entsprechende Darstellung des Verfahrens, wobei zusätzlich die Möglichkeit der Erzeugung eines mechanischen Entwässerungsdrucks dargestellt ist,
**Fig. 3:**
   eine Figur 2 entsprechende Darstellung, wobei jedoch zwei übereinander angeordnete Schlammkammern betrieben werden,
**Fig. 4:**
   eine Figur 2 entsprechende Darstellung, wobei jedoch die Schlammkammer geneigt angeordnet ist, um das Filtrat auf der Oberseite der Schlammkammer abzuführen,
**Fig. 5:**
   eine schematische Schnittansicht einer ersten Ausführungsform der erfindungsgemäßen Vorrichtung, wobei die Vorentwässerungsstufe, der Zwischenbehälter und die Schlammkammer dargestellt sind,
**Fig. 6:**
   eine Figur 5 entsprechende Ansicht einer zweiten Ausführungsform,
**Fig. 7:**
   eine Schnittansicht längs der Linie VII-VII von Figur 6,
**Fig. 8:**
   eine Schnittansicht in stark vereinfachter Darstellung einer Vorentwässerungsstufe, wie sie bei den Ausführungsformen gem. Figur 1 bis 4 Verwendung finden kann,
**Fig. 9:**
   eine schematische Schnittansicht einer bevorzugten Ausführungsform eines der Zwischenbehälter,
**Fig. 10:**
   eine Schnittdarstellung des prinzipiellen Aufbaus der Schlammkammer, wie sie in Fig. 1 dargestellt ist,
**Fig. 11:**
   eine Schnittansicht längs der Linie XI-XI von Fig. 8,
**Fig. 12:**
   die Schlammkammer gemäß Figur 10 in der geschlossenen Stellung,
**Fig. 13:**
   eine Schnittansicht längs der Linie XIII-XIII von Fig. 12,
**Fig. 14:**
   eine seitliche Schnittansicht einer modulartigen Zwischenplatte zur Vergrößerung der Anzahl der Schlammkammern,
**Fig. 15:**
   eine Schnittansicht längs der Linie XV-XV von Fig. 12,
**Fig. 16:**
   eine seitliche Schnittansicht einer praktischen Ausführungsform wie sie zur Durchführung des Verfahrens gemäß Fig. 2 bis 4 verwendet werden kann,
**Fig. 17:**
   eine horizontale Schnittansicht der Vorrichtung gemäß Fig. 16,
**Fig. 18 und 18A:**
   Schnittansichten von Fig. 16 in der Ebene der Sperrklinken bzw. der Hubzylinder, wobei lediglich diese Details dargestellt sind,
**Fig. 19:**
   eine Schnittansicht der Figuren 16 bzw. 17 längs der Linien XIX-XIX, wobei die Schlammkammern geöffnet dargestellt sind,
**Fig. 20 und 21:**
   die Fig. 19 entsprechenden Stellungen der Hubzylinder bzw. der Sperrklinken, der Anschläge und des hydraulischen Betts,
**Fig. 22:**
   eine Schnittansicht längs der Linien XXII-XXII von Fig. 16 bzw. 17, wobei die Schlammkammer verschlossen und verriegelt veranschaulicht ist,
**Fig. 23 und 24:**
   Darstellungen entsprechend der Figuren 20 und 21, jedoch entsprechend dem Betriebszustand gemäß Fig. 22,
**Fig. 25:**
   eine Schnittansicht längs der Linie XXV-XXV von Fig. 16 bzw. 17, wobei der Zustand der Erzeugung des zusätzlichen mechanischen Entwässerungsdrucks dargestellt ist,
**Fig. 26 und 27:**
   Darstellungen entsprechend den Figuren 20 und 21 bzw. 23 und 24, jedoch in dem Betriebszustand gemäß Fig. 25,
**Fig. 28:**
   eine Figur 12 entsprechende Darstellung einer weiteren sehr einfach aufgebauten Form der Schlammkammer,
**Fig. 29:**
   eine Schnittansicht der Schlammkammer längs der Linie XXIX - XXIX von Figur 28,
**Fig. 30:**
   eine Schnittansicht der erfindungsgemäß bei der Ausführungsform gemäß Figuren 16 und 17 verwendeten Dichtung in vier verschiedenen Betriebszuständen a bis d, und
**Fig. 31:**
   eine Schnittansicht der erfindungsgemäß bei Ausführungsformen verwendeten Dichtung, welche mehr als eine Filterfläche in der Schlammkammer aufweist, in drei verschiedenen Betriebszuständen a bis c.

Zur Erläuterung der verschiedenen Varianten des erfindungsgemäßen Verfahrens wird zunächst auf die schematischen Darstellungen gemäß den Figuren 1 bis 4 Bezug genommen, in denen verschiedene Ausführungsformen der erfindungsgemäßen Vorrichtung hinsichtlich ihrer grundsätzlichen Bestandteile dargestellt sind.

Das Grundprinzip des erfindungsgemäßen Verfahrens ist wohl am besten aus Fig. 1 ersichtlich.

Die dort dargestellte allgemein mit 1 bezeichnete Vorrichtung besteht aus drei Hauptkomponenten, nämlich einer Vorentwässerungsstufe 2, einem Zwischenbehälter 3 und einer Filterpresse 4.

Die Vorentwässerungsstufe 2 besteht aus einem Ausgleichsbehälter 5, welcher an eine kontinuierliche Schlammzufuhr 6 angeschlossen ist. In dem Ausgleichsbehälter 5 ist ein Filterkorb 7 angeordnet, welcher einen Filtratauslaß 8 aufweist. Der Filterkorb 7 ist in den in dem Ausgleichsbehälter eingespeisten Schlamm 9 eingetaucht.

Der Ausgleichsbehälter 5 weist an seinem Unterende eine Schlammauslaßleitung 10 auf, welche mit dem Schlammeinlaß 11 des Zwischenbehälters 3 verbunden ist. In der Schlammauslaßleitung 10 ist ein Sperr- oder Steuerventil 12 vorgesehen, durch welches die Zufuhr von Schlamm zu dem Zwischenbehälter 3 unterbrochen werden kann.

Der Zwischenbehälter 3 ist nach Art einer großen Injektionsspritze als Kolbenzylindereinheit ausgebildet und besteht aus einem Zylindergehäuse 13 und einem in diesem verschiebbaren Kolben 14, welcher mit seiner Kolbenstange mit einem Antrieb 15 verbunden ist, der in dem Ausführungsbeispiel durch einen Hydraulikkolben oder Pneumatikkolben 16 gebildet ist.

Der Schlammauslaß 17 des Zwischenbehälters 3 ist über eine Leitung 18 mit dem Schlammeinlaß 19 einer Schlammkammer 20 der Filterpresse 4 verbunden, wobei in der Leitung 18 ein weiteres Sperr- oder Steuerventil 21 vorgesehen ist. Die Schlammkammer 20 der Filterpresse 4 ist zwischen einer oberen Druckplatte 22 und einer unteren Druckplatte 23 angeordnet, welche einzeln oder beide in vertikaler Richtung beweglich ausgebildet sein können.

Die Schlammkammer 20 wird durch eine obere Filterfläche 24 und eine untere Filterfläche 25 gebildet, welche aus einem oberen Filterband 26 und einem unteren Filterband 27 bestehen, die geradlinig in horizontaler Richtung hin und her verfahrbar sind. Zwischen den Filterbändern 26 und 27 ist eine die Schlammkammer 20 rundum einschließende Dichtung 28 vorgesehen, welche bei geschlossener Schlammkammer dichtend gegen die beiden Filterbänder 26 und 27 anliegt. Oberhalb des oberen Filterbands 26 und unterhalb des unteren Filterbandes 27 ist zwischen den Druckplatten 22, 23 und den Filterbändern 26, 27 noch je eine Lagerplatte 31 angeordnet, welche auf der Seite der Filterbänder 26, 27 offene Kanäle oder Nuten aufweist, die zur Abförderung des durch die Filterbänder austretenden Filtrats dienen. Dies wird weiter unten unter Bezugnahme auf die verschiedenen Ausführungsformen der erfindungsgemäßen Vorrichtung noch näher erläutert.

Bei dem Verfahren nach der vorliegenden Erfindung wird der zu entwässernde Schlamm durch die kontinuierliche Schlammzufuhr 6 fortlaufend in den Ausgleichsbehälter 5 eingespeist, wobei sich je nach Betriebszustand ein oberer Schlammspiegel 29 oder ein unterer Schlammspiegel 30 einstellen kann, was den jeweiligen Maximalzuständen entspricht. Der kontinuierlich zugeführte Schlamm wird in dem Ausgleichsbehälter 5 einer kontinuierlichen Vorentwässerung unter Schwerkraftwirkung ausgesetzt, wobei das anfallende Filtrat aus dem Filtratauslaß 8 des Filterkorbes 7 abgeführt wird. Auf diese Weise weist der Schlamm 9 an der Schlammauslaßleitung 10 bereits einen Trockensubstanzgehalt von etwa 20% auf.

Intermittierend wird portionsweise ein Schlammvorrat in den Zwichenbehälter 3 überführt, indem das Steuerventil 12, welches bevorzugt als Kugelhahn ausgebildet ist, geöffnet wird und der Kolben 14 aus seiner vorderen Stellung durch den Antrieb 15 nach hinten verfahren wird. Dieses Füllen des des Zwischenbehälters 3 kann ausgesprochen schonend und langsam erfolgen, so daß die Flockung des Schlamms erhalten bleibt. Der Zwischenbehälter 3 nimmt hierbei einen Schlammvorrat auf, welcher etwa dem eineinhalbfachen Volumen der Schlammkammer 20 entspricht. Nach vollständiger Füllung des Zwischenbehälters 3 wird das Steuerventil 12 geschlossen und anschließend das Steuerventil 21 geöffnet. Danach wird das in dem Zwischenbehälter 3 enthaltene Schlammvolumen positiv aus dem Zwischenbehälter verdrängt, in dem der Kolben 14 durch den Antrieb 15 in seine vordere Stellung bewegt wird. Während dieser Vorwärtsbewegung wird in der Schlammkammer 20 bereits ein hydrostatischer Druck aufgebaut, da der Volumeninhalt des Zwischenbehälters 3 größer ist als der Volumeninhalt der Schlammkammer 20. Bevorzugt wird anschließend nochmals das Steuerventil 21 geschlossen und das Steuerventil 12 geöffnet und der Kolben 14 erneut in seine hintere Stellung durch den Antrieb 15 bewegt, so daß der Zwischenbehälter 3 nochmals mit Schlamm befüllt wird. Anschließend wird wiederum das Steuerventil 12 geschlossen und das Steuerventil 21 geöffnet und der Kolben 14 erneut nach vorne bewegt, so daß durch diese Bewegung unter positiver Verdrängung des enthaltenen Schlammvolumens ein erhöhter hydrostatischer Druck in der Schlammkammer 20 aufgebaut wird, welcher bevorzugt bis etwa 5 bar betragen soll. Nach Erreichen des gewünschten hydrostatischen Drucks in der Schlammkammer 20 wird das Steuerventil 21 erneut geschlossen und durch Öffnen des Steuerventils 12 wird der Zwischenbehälter 3 erneut vollständig gefüllt und steht bereit für den nächsten Zyklus. Gleichzeitig wird durch entsprechende Bewegung der Druckplatten 22 und/oder 23 die Schlammkammer 20 geöffnet und der hergestellte Schlammkuchen durch horizontales Verfahren der Filterbänder 26, 27 aus der Schlammkammer 20 ausgetragen.

Die Reinigung der Filterbänder 26 und 27 erfolgt durch auf beiden Seiten vorgesehene Waschdüsen, während diese wieder in ihre Ausgangsposition zurückbewegt werden, wonach die Schlammkammer erneut geschlossen wird und worauf der oben beschriebene Zyklus wiederholt werden kann.

Die Ausführungsform gemäß Fig. 2 entspricht in ihren technischen Einzelheiten der Ausführungsform gemäß Fig. 1, so daß für gleiche bzw. gleichwirkende Teile gleiche Bezugszeichen verwendet wurden. Lediglich die Filterpresse 4 ist gegenüber dem Ausführungsbeispiel gemäß Fig. 1 abweichend gestaltet, um die Durchführung eines zusätzlichen Verfahrensschrittes zu ermöglichen.

Wie gezeigt, ist bei dieser Ausführungsform die untere Druckplatte 23 auf einem hydraulischen Bett 32 gelagert, welches aus einer Vielzahl von auf die Druckplatte 23 einwirkenden Hochdruckerzeugern 33 besteht.

Bei dieser Verfahrensvariante wird, nachdem in der Schlammkammer 20 der gewünschte hydrostatische Druck erreicht wurde und das Steuerventil 21 geschlossen wurde, das Volumen der Schlammkammer 20 durch Betätigung der Hochdruckerzeuger 33 verkleinert, indem diese die untere Druckplatte 23 nach oben gegen die obere Druckplatte 22 drücken. Hierdurch wird ein mechanischer Entwässerungsdruck erzeugt, welcher beispielsweise in der Größenordnung von 30 bar liegen kann, und welcher folglich größer ist als der zuvor erreichte hydrostatische Druck. Durch diese Verfahrensweise ist eine erhebliche, weitere Steigerung des Trockensubstanzgehalts des erhaltenen Filterkuchens möglich.

Nach Durchführung der zusätzlichen Entwässerung durch mechanischen Entwässerungsdruck werden dann die Hochdruckerzeuger 33 entlasted und die Schlammkammer 20 geöffnet und der so erhaltene Filterkuchen wiederum durch horizontales Verfahren der Filterbänder 26 und 27 aus der Schlammkammer ausgetragen. Anschließend wird die Schlammkammer erneut geschlossen, und der oben beschriebene Zyklus kann erneut beginnen.

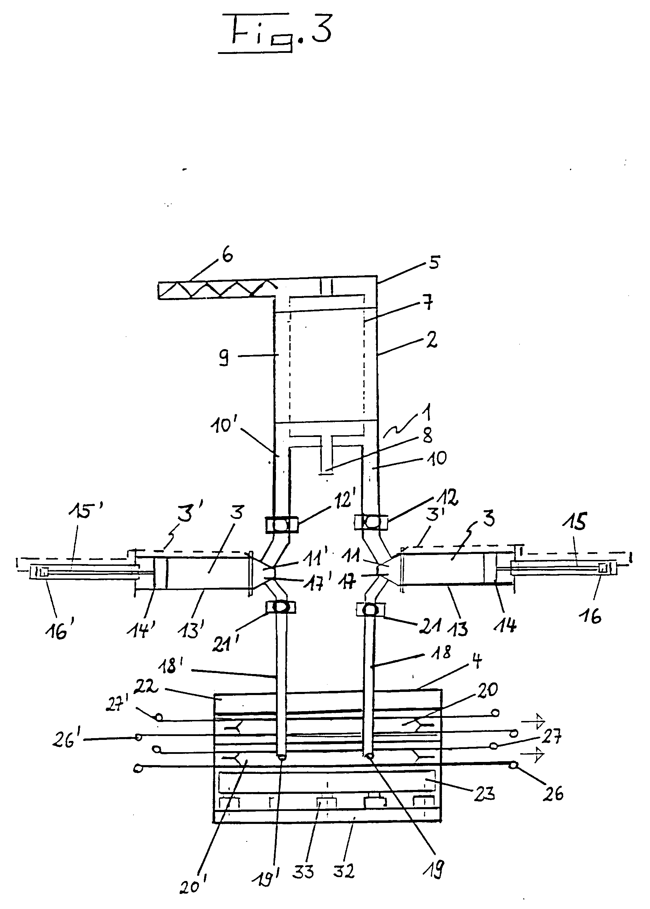

Die Ausführungsform gemäß Fig. 3 entspricht im wesentlichen der Ausführungsform gemäß Fig. 2 mit dem Unterschied, daß einerseits in mehreren übereinander angeordneten Schlammkammern 20 gleichzeitig entwässert wird, und daß der Schlamm gleichzeitig an mehreren Punkten der Schlammkammer 20 aus einer entsprechenden Anzahl von Zwischenbehältern eingespeist wird, und folglich auch der hydrostatische Druck, ausgehend von mehreren Punkten in den einzelnen Schlammkammern 20, aufgebaut wird. Hinsichtlich der konstruktiven Einzelheiten wird auf die weiter unten stehende Beschreibung der verschiedenen Ausführungsformen der erfindungsgemäßen Vorrichtung verwiesen. In der Darstellung gemäß Fig. 3 wurden lediglich die entsprechend der Anzahl der Schlammkammern vervielfältigten Einzelteile an dem Bezugszeichen mit einem Strich versehen, wobei die die obere Schlammkammer 20 versorgenden Zwischenbehälter 3 in gestrichelten Linien veranschaulicht sind.

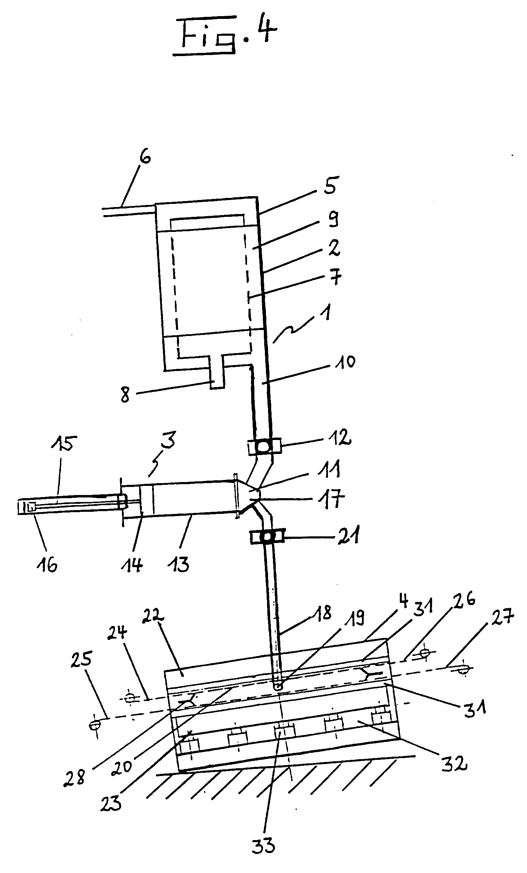

Die Ausführungsform gemäß Fig. 4 entspricht in den wesentlichen Einzelheiten der Ausführungsform gemäß Fig. 2, so daß wiederum für gleiche bzw. gleichwirkende Teile gleiche Bezugszeichen verwendet wurden. Lediglich ist bei diesem Ausführungsbeispiel die Schlammkammer 20 mit den entsprechenden Filterflächen 25, 26 gegen die Horizontale geneigt angeordnet, was dazu dient, das aus den Filterbändern 26 und 27 oben und unten austretende Filtrat, welches sich in den offenen Kanälen der Lagerplatten 31 sammelt, ständig unter Schwerkraftwirkung abzufördern.

Im folgenden wird zur Beschreibung einer ersten praktischen Ausführungsform der erfindungsgemäßen Vorrichtung auf die Figuren 5 bis 13 Bezug genommen, wobei sich diese Figuren mit technischen Einzelheiten der Vorentwässerungsstufe 2, des Zwischenbehälters 3 und der dazugehörigen und an den oder die Zwischenbehälter 3 angeschlossenen Filterpresse 4 befassen.

Wie in den Figuren 5 bis 8 und insbesondere in Figur 8 gezeigt, ist bei einer ersten Ausführungsform nach der Erfindung in dem Ausgleichsbehälter 5 der Vorentwässerungsstufe 2 ein Filterkorb 7 vorgesehen. Auf der Außenseite des Filterkorbes 7 ist eine Wascheinrichtung 38 vorgesehen, welche aus Waschdüsen 38a und mindestens einer über die Höhe des Filterkorbes 7 reichenden Bürste 38b besteht. Weiterhin ist auf der Innenseite des Filterkorbes 7 ein Abstreifer 35 vorgesehen, welcher auf einer Stange 35a über die Höhe des Filterkorbes 7 aufwärts und abwärts bewegbar ist. Die aus der Wascheinrichtung 38 und dem Abstreifer 35 bestehende Einheit ist über einem Antrieb 34 drehangetrieben, so daß durch Drehung dieser Einheit und die Aufwärts- und Abwärtsbewegung des Abstreifers 35 sowohl die Außenseite als auch die Innenseite des Filterkorbes, welcher zylindrisch ausgebildet ist, gründlich gereinigt werden kann. Der Abstreifer 35 dient dabei hauptsächlich dazu den Boden und die Schlammauslässe des Filterkorbes periodisch zu reinigen. Bei dem veranschaulichten Ausführungsbeispiel ist der Antrieb 34 durch einen Elektromotor 35 und ein Stirnradgetriebe 36 gebildet. Die Bürsten 35b, von denen bevorzugt drei Stück um den Umfang des Filterkorbs verteilt vorgesehen sind, laufen langsam kontinuierlich um den Filterkorb um, wobei die Borsten immer wieder in die Filteröffnungen eintreten und die Entwässerung aktivieren.

Das aus dem Filterkorb 7 entsprechend den Pfeilen 39 in Figur 5 und 8 strömende Filtrat wird durch den im Boden des Ausgleichsbehälters 5 vorgesehenen Filtratauslaß 8 nach außen abgeführt. Der teilweise entwässerte Schlamm 9 im Inneren des Filterkorbes 7 kann durch eine Anzahl von Schlammauslaßleitungen 10 unter Steuerung von einer entsprechenden Anzahl von Sperrventilen 12 portionsweise in die entsprechende Anzahl von Zwischenbehältern 3 abgezogen werden.

Wie aus den Figuren 5 und 8 ersichtlich ist bei diesem Ausführungsbeispiel die kontinuierliche Schlammzufuhr durch einen Mischer 40 gebildet, welcher durch eine kontinuierlich laufende Pumpe beschickt wird, und welcher durch einen Motor 41 angetrieben ist und den Schlamm kontinuierlich in den Ausgleichsbehälter 5 einspeist. Der Mischer 40 ist stehend angeordnet und mischt den Schlamm mit dem Flockungsmittel, welches durch die Dosiereinrichtung 40B zugesetzt wird. Zum Mischen selbst weist der Mischer 40 eine Misch- und Förderschnecke 40A auf, welche in Figur 5 schematisch dargestellt ist.

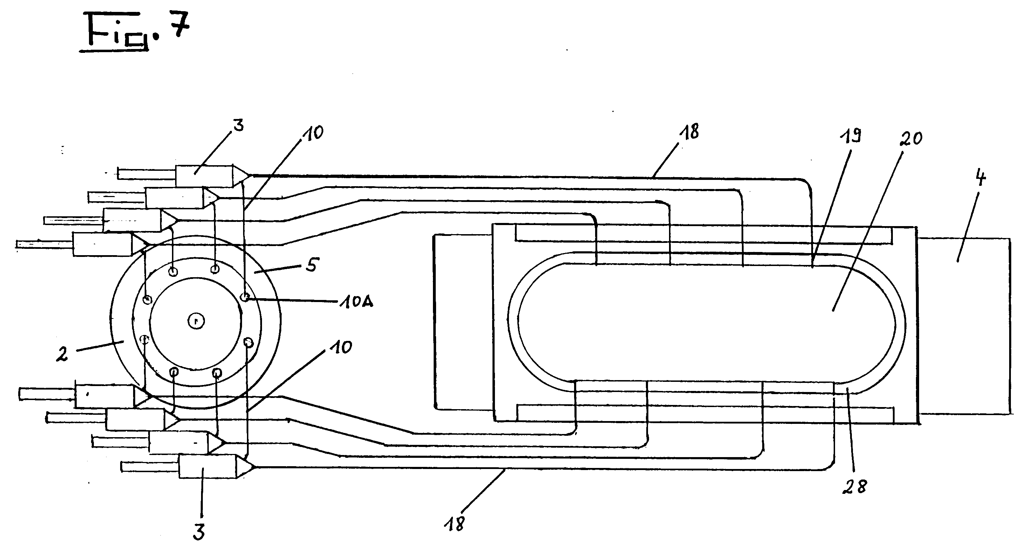

Wie in den Figuren 5 bis 8 dargestellt, sind im Boden des Ausgleichsbehälters 5 der Vorentwässerungsstufe 2 eine Anzahl von Schlammauslässen 10A vorgesehen, welche über die Schlammauslaßleitungen 10 mit den Schlammeinlässen 11 der Zwischenbehälter 3 verbunden sind. Die Anzahl der Schlammauslässe 10A, der Schlammauslaßleitungen 10 und der Zwischenbehälter 3 entspricht der Anzahl der Schlammeinlässe 19 der Schlammkammer 20, wie dies am besten aus Figur 7 ersichtlich ist.

Bei der Ausführungsform wie sie in Figur 7 in einer horizontalen Schnittdarstellung in der Ebene der Schlammkammer 20 gezeigt ist, weist die Schlammkammer 20 insgesamt acht Schlammeinlässe 19 auf, welche über acht Leitungen 18 je einzeln mit acht Zwischenbehältern 3 verbunden sind. Die acht Zwischenbehälter 3 weisen insgesamt ein Volumen auf, welches dem eineinhalbfachen des Volumens der Schlammkammer 20 entspricht.

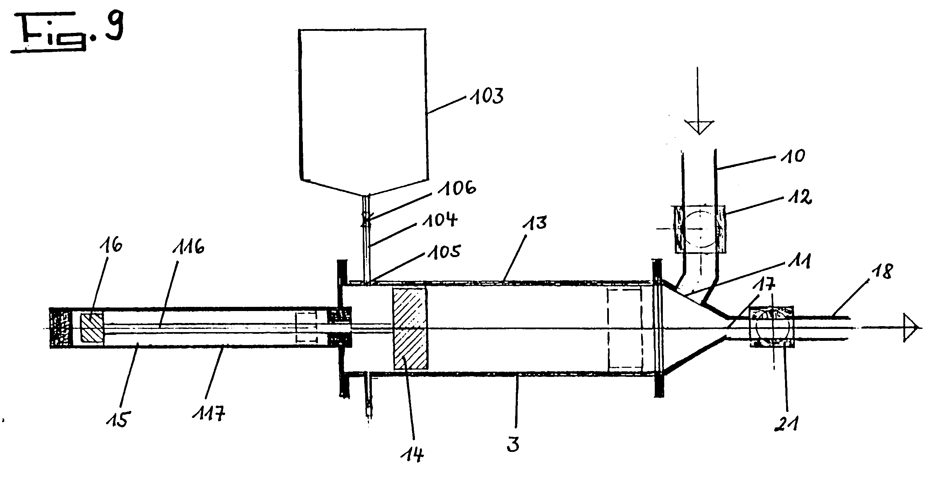

Es wird nun auf Figur 9 der Zeichnungen Bezug genommen, in welcher in näheren Einzelheiten einer der Zwischenbehälter 3 veranschaulicht ist. Wie gezeigt, ist der Zwischenbehälter 3 vom Grundprinzip her wie eine große Injektionsspritze aufgebaut, in dem er durch eine Kolbenzylindereinheit 13, 14 gebildet ist. Am Vorderend des Zylinders 13 des Zwischenbehälters 3 ist der mit der Schlammauslaßleitung 10 in Verbindung stehende Schlammeinlaß 11 vorgesehen, vor welchem das Sperr- und Steuerventil 12 angeordnet ist. Bei dem in Figur 9 veranschaulichten Ausführungsbeispiel ist das Sperr- und Steuerventil 12 als elektrisch oder hydraulisch gesteuerter Kugelhahn ausgebildet, um eine möglichst schonende Förderung des geflockten Schlamms, das heißt ohne Querschnittsveränderungen oder Störungen zu gewährleisten. Ebenfalls im Vorderende des Zylinders 13 ist der Schlammauslaß 17 des Zwischenbehälters 3 vorgesehen, welcher mit der Leitung 18 in Verbindung steht und vor welchem das zweite Sperr- und Steuerventil 21 angeordnet ist. Das Sperr- und Steuerventil 21 ist ebenfalls als elektrisch oder hydraulisch gesteuerter Kugelhahn ausgebildet.

In dem Zylinder 13 ist der Kolben 14 hin- und her verschieblich angeordnet, durch welchen die positive Verdrängung des Schlammvolumens in dem Zwischenbehälter 3 erfolgt. Der Kolben 14 weist einen Antrieb 15 auf, welcher durch einen Hydraulik- oder Pneumatikkolben 16 gebildet ist, der in einem Zylinder 117 verschiebbar angeordnet ist und über seine Kolbenstange 116 mit dem Kolben 14 verbunden ist.

Da der in dem Zwischenbehälter aufgenommene geflockte Schlamm schleifende oder aggressive Bestandteile enthalten kann, ist bei der Ausführungsform gemäß Figur 9 zusätzlich ein Schmiermittelbehälter 103 vorgesehen, welcher über eine Leitung 104 mit einem Einlaß 105 in den Zylinder 13 verbunden ist, der auf der Rückseite des Kolbens 14 liegt. Für Wartungsarbeiten ist zusätzlich ein Ventil 106 vorgesehen.

Die Anordnung ist hierbei derartig getroffen, daß wenn der Kolben 14 durch den Antrieb 15 nach vorne bewegt wird und das Schlammvolumen aus dem Zwischenbehälter verdrängt, gleichzeitig auf der Rückseite des Kolbens 14 Schmiermittel aus dem Schmiermittelbehälter 103 angesaugt wird, und somit der Zylinder 13 ständig geschmiert wird. Wenn das Steuerventil 12 geöffnet und das Steuerventil 21 geschlossen ist und der Kolben 14 nach hinten bewegt wird und aus dem Ausgleichsbehälter 5 ein neues Schlammvolumen ansaugt, wird das hinter dem Kolben 14 in dem Zylinder 13 befindliche Schmiermittel zurück in den Schmiermittelbehälter 103 verdrängt.

Die in den Figuren 5 bis 8 veranschaulichte Filterpresse 4 wird weiter unten in Verbindung mit Figur 5 unter gesonderter Bezugnahme auf die Figuren 16 und 17 näher beschrieben.

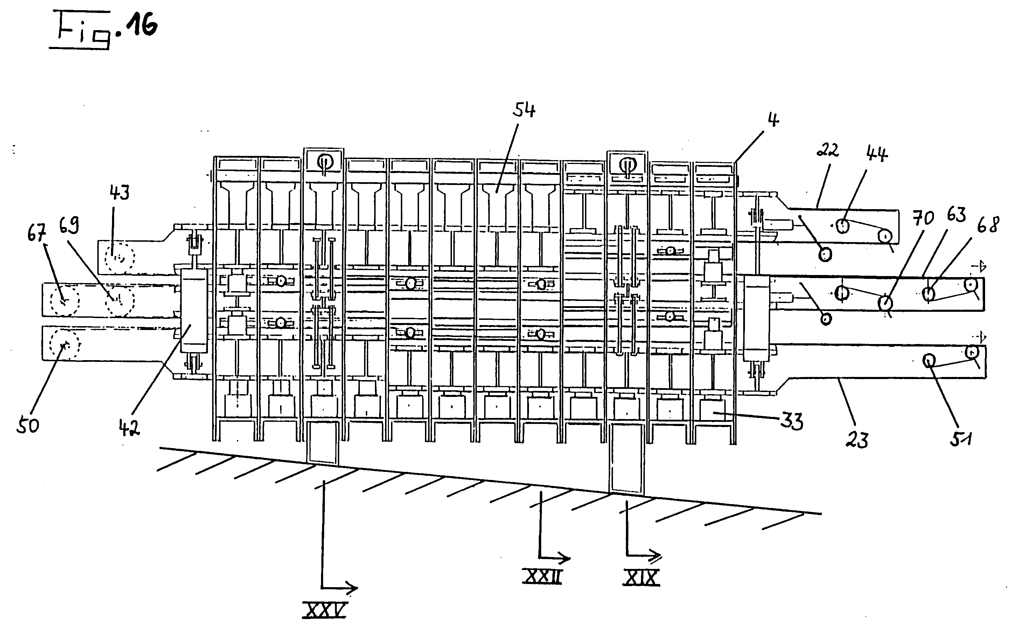

In den Figuren 10 bis 15 sind Einzelheiten der zu der Vorentwässerungsstufe 2 und den Zwischenbehältern 3 gemäß den Figuren 5 bis 9 zugehörigen Filterpresse 4 gezeigt, deren Grundaufbau der Verfahrensweise gemäß Fig. 1 entspricht, wobei jedoch in den Figuren 14 und 15 die technischen Möglichkeiten gezeigt sind, die Anzahl der Schlammkammern 20 zu vergrößern.

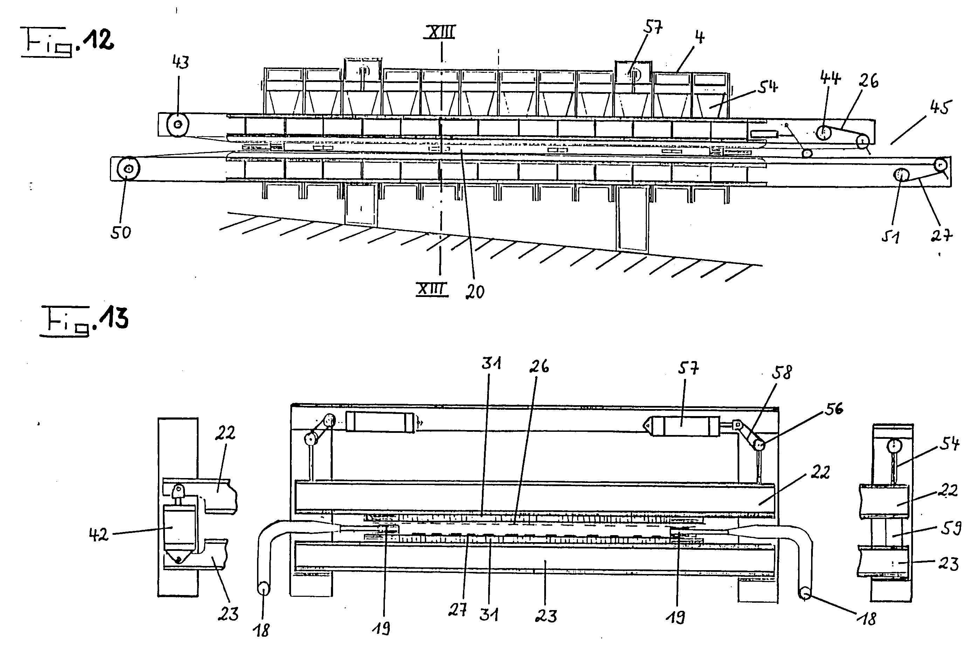

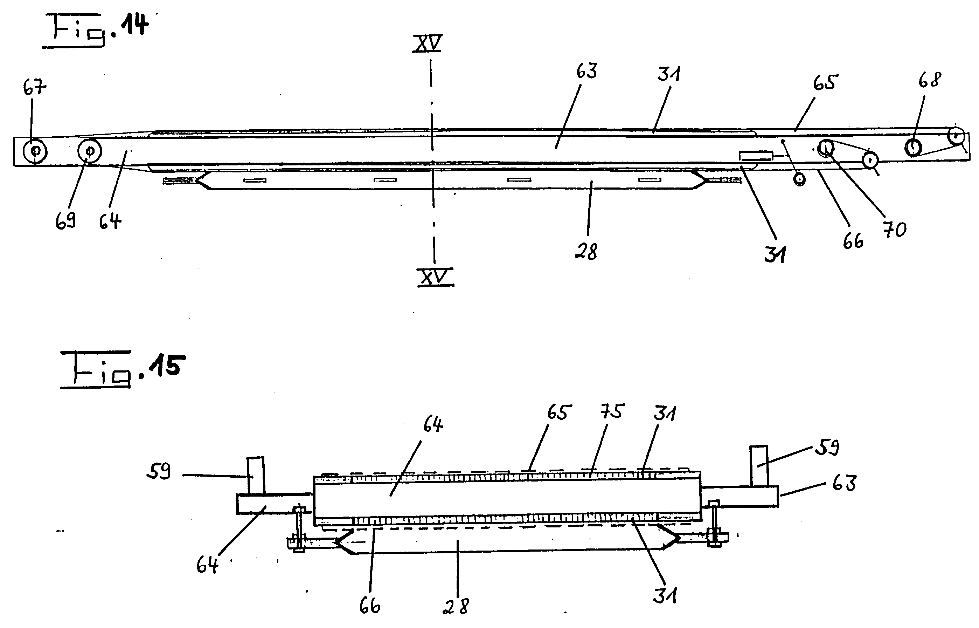

Die Figuren 10 bis 13 zeigen die Filterpresse 4 in den beiden grundsätzlichen Stellungen, nämlich einmal die geöffnete Stellung gemäß Fig. 10 und 11 zum Austragen des Filterkuchens und Reinigen der Filterflächen und die geschlossene Stellung gemäß den Figuren 12 und 13, in welcher die Schlammkammer gefüllt und die Entwässerung unter hydrostatischem Druck entsprechend der Verfahrensweise gemäß Fig. 1 durchgeführt wird.

Wie gezeigt, weist die in den Figuren 10 bis 13 darstellte Filterpresse die obere Druckplatte 22 und die untere Druckplatte 23 auf, wobei die obere Druckplatte 22 gegenüber der unteren Druckplatte 23 durch Hubzylinder 42 (Fig. 11) anhebbar und absenkbar ist.

An der oberen Druckplatte 22 und der unteren Druckplatte 23 ist jeweils auf der der Schlammkammer 20 zugewandten Seite die Lagerplatte 31 befestigt, welche in Richtung der Schlammkammer 20 offene Kanäle 75 zur Abführung des Filtrats aufweist. Die Lagerplatten bestehen bevorzugt aus einem reibungsarmen Kunststoff, da auf diesen Lagerplatten 31 die die obere und untere Filterfläche 24 bzw. 25 bildenden Filterbänder 26 und 27 gleiten.

Bei sämtlichen Ausführungsformen sind die in den Figuren der Zeichnungen lediglich schematisch veranschaulichten Kanäle 75 der Lagerplatten 31 derart angeordnet, daß sie in Längsrichtung der Schlammkammern 20 parallel zur Hauptachse geradlinig verlaufen. Aufgrund des Gefälles wird hierdurch sichergestellt, daß das sich in den Kanälen 75 sammelnde Filtrat entgegen der Austragsrichtung der Filterpresse an der Stirnseite der Lagerplatten 31 unter Schwerkraftwirkung abgefördert wird.

Die Filterbänder 26 und 27 sind bei dem dargestellten Ausführungsbeispiel horizontal hin und her verfahrbar ausgebildet. Das obere Filterband 26 ist an seinen beiden Enden jeweils von einem umsteuerbaren Wickelantrieb 44 gehalten, so daß das Filterband 26 einmal auf den linken Wickelantrieb 43 aufgewickelt wird, d.h. die Filterfläche 24 in die Schlammkammer 20 hineinbewegt wird, und wobei im umgekehrten Falle das Filterband 26 auf den rechten Wickelantrieb 44 aufgewickelt wird, d.h. die Filterfläche 24 aus der Schlammkammer 20 herausbewegt wird. Bei dem am Austragsende 45 der Filterpresse 4 liegenden Wickelantrieb 44 ist das Filterband 26 noch um eine Umlenkwalze 46 geführt, welcher ein Abstreifer 47 zugeordnet ist, der möglicherweise am Filterband 26 anhaftende Reste des Filterkuchens beim Austragen abstreift. Ferner ist an der oberen Druckplatte 22 noch eine über einen Antrieb 48 verschwenkbare Waschdüse 49 vorgesehen, die bei geöffneter Schlammkammer 20 und bei der Rückkehrbewegung der Filterbänder 26, 27 in die Schlammkammer 20 nach Abwurf des Filterkuchens in den Spalt zwischen der oberen Druckplatte 22 und der unteren Druckplatte 23 eingeschwenkt werden kann, um beide Filterbänder 26 und 27 zu waschen. Das untere Filterband 27 ist ebenfalls entsprechend dem oberen Filterband 26 von zwei Wickelantrieben 50 und 51 aufgenommen, die synchron zu den Wickelantrieben 43 und 44 betrieben werden. Am Austragsende 45 der Filterpresse 4 ist das untere Filterband 27 ebenfalls um eine Umlenkwalze 52 mit einem Abstreifer 53 geführt.

Wie ferner gezeigt, sind die Schlammeinlässe 19 in die Schlammkammer 20, welche über eine entsprechende Anzahl von Leitungen 18 mit der gleichfalls entsprechenden Anzahl von Zwischenbehältern 3 verbunden sind, als horizontale, schlitzartige öffnungen in der die Schlammkammer 20 umgebenden Dichtung 28 ausgebildet.

Wie weiterhin aus den Figuren 10 bis 13 ersichtlich, kann die Schlammkammer 20 in der geschlossenen Stellung mechanisch verriegelt werden, so daß es nicht erforderlich ist, einen dem Entwässerungsdruck entsprechenden bzw. größeren Gegendruck aufzubauen. Zu diesem Zweck ist bei der erfindungsgemäßen Filterpresse 4 eine Sperrklinkenvorrichtung 54 vorgesehen, welche aus einer Anzahl von verschwenkbaren Sperrklinken 55 besteht, die auf einer gemeinsamen Achse 56 längs beider Seitenkanten der Filterpresse 4 gelagert sind, wobei jede der Achsen über Pneumatikzylinder 57 und einen Hebelantrieb 58 zwischen der geöffneten Stellung gemäß Fig. 10 und 11 und der verriegelten Stellung gemäß Fig. 12 und 13 verschwenkbar ist.

Wie ferner insbesondere aus dem Detail gemäß Fig. 11 ersichtlich, sind zwischen der oberen Druckplatte 22 und der unteren Druckplatte 23 wirksame Anschläge 59 vorgesehen, durch welche die bei abgesenkter Stelllung der oberen Druckplatte 22 zu erreichende Höhe der geschlossenen Schlammkammer 20 festgelegt wird.

Wie weiterhin in Fig. 12 dargestellt, ist die Filterpresse 4 bevorzugt derart aufgestellt, daß die Schlammkammer 20 gegenüber der Horizontalen geneigt ist, wobei die Neigung etwa einem Gefälle der Filterflächen 24 und 25 von 5° entspricht. Hierdurch wird sichergestellt, daß das aus der oberen Filterfläche 24 in die Kanäle der Lagerplatte 31 eintretende Filtrat bei der Entwässerung aufgrund des Gefälles abgeführt wird.

Bei der in den Figuren 11 bis 13 dargestellten Ausführungsform wird die Schlammkammer durch die die Schlammkammer 20 umgebende, flexible Dichtung 28 und den von dieser umschlossenen Bereich der Filterbänder 26 und 27 gebildet. Auf die Einzelheiten der Dichtung 28 selbst wird weiter unten noch näher eingegangen. Wie in Fig. 11 gezeigt, ist die Dichtung 28 von einem Hilfsrahmen 60 getragen, welcher auf und ab beweglich mittels Schubstangen 61 an der oberen Druckplatte aufgehängt ist. Diese Art der Aufhängung ist zweckdienlich, damit die Schlammkammer 20 sicher geschlossen werden kann, wenn die obere Druckplatte 22 in Richtung der unteren Druckplatte 23 bis zum Erreichen der Anschläge 59 durch Entlasten der Hubzylinder 42 abgesenkt wird. Die Schubstangen 61 bilden somit Mitnehmer 62, die eine begrenzte Relativbewegung zwischen der oberen Druckplatte 22 und der Dichtung 28 gestatten.

Die Figuren 14 und 15 zeigen einen modulartigen Bauteil in Form einer Zwischenplatte 63, mittels dessen sich die Anzahl von übereinander angeordneten Schlammkammern 20 in der Filterpresse 4 gemäß den Figuren 10 bis 13 und ebenfalls bei den weiter unten beschriebenen Ausführungsbeispielen beliebig steigern läßt. Durch die Zwischenfügung einer Zwischenplatte 63 gemäß den Figuren 14 und 15 zwischen der oberen Druckplatte 22 und der unteren Druckplatte 23 entsteht jeweils eine weitere Schlammkammer 20. Da im praktischen Einsatz eine derartige Zwischenplatte beidseitig mit gleichem Druck belastet wird, da in den übereinanderliegenden Schlammkammern 20 der gleiche Entwässerungsdruck aufgebaut wird, kann ihre Trägerplatte 64 beispielsweise aus einem Lichtgitterrost bestehen, da es lediglich auf eine gewisse Druckfestigkeit ankommt. Wie gezeigt, weist jede Zwischenplatte auf ihrer Ober- und Unterseite je eine der Lagerplatten 31 auf, auf denen ein oberes Filterband 65 bzw. ein unteres Filterband 66 gleitet. Ferner sind an der Zwischenplatte 63 für die Filterbänder entsprechende Wickelantriebe 67, 68, 69 und 70 mit den dazugehörigen Umlenkrollen, Abstreifern und einer Wascheinrichtung vorgesehen, welche identisch zu den oben beschriebenen Einzelheiten sind, die unter Bezugnahme auf die obere bzw. untere Druckplatte 22 bzw. 23 beschrieben wurden. Lediglich sind die Wickelantriebe und die dazugehörigen Hilfseinrichtungen für die beiden Filterbänder 65 und 66 in der Zwischenplatte 63 angeordnet.

An der Unterseite der Zwischenplatte 63 ist ebenfalls eine Dichtung 28 mit ihrem Hilfsrahmen 60 in Mitnehmern 62 aufhängt. An den Seitenkanten der Zwischenplatte 63 sind ferner die Anschläge 59 vorgesehen.

Die Anordnung und Aufhängung der Zwischenplatte 63 wird weiter unten unter Bezugnahme auf Fig. 21 noch näher erläutert.

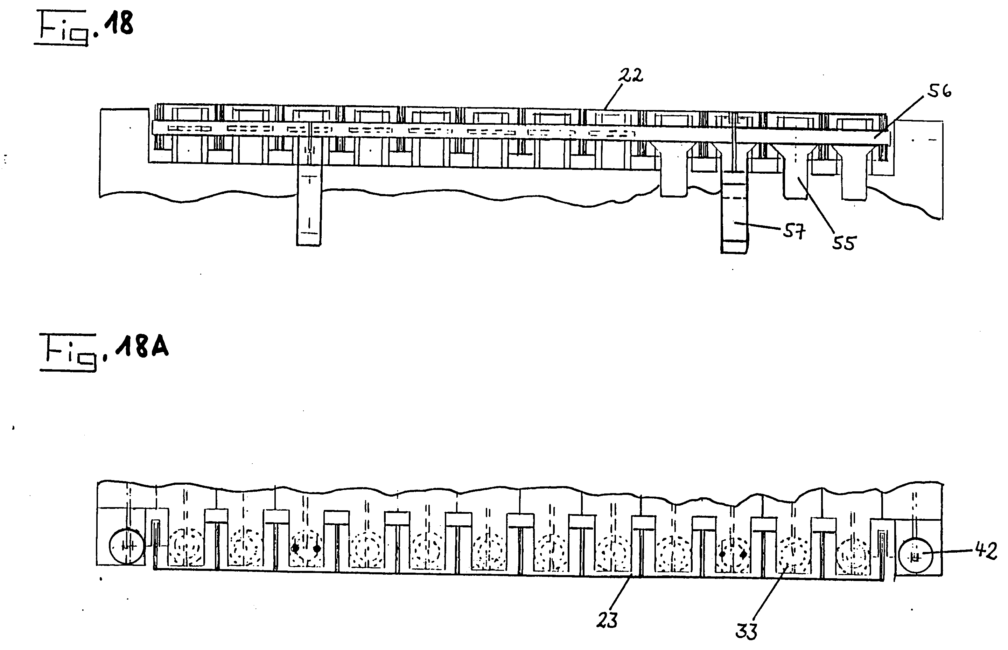

In den Figuren 16 bis 27 ist eine weitere praktische Ausführungsform der Vorrichtung nach der Erfindung veranschaulicht, wie sie zur Durchführung des Verfahrens gemäß Fig. 2 bis 4 insbesondere gemäß Figur 3 zweckdienlich ist.

Fig. 16 zeigt hierbei eine seitliche Schnittansicht der Filterpresse 4, wobei die Vorentwässerungseinrichtung und die Zwischenbehälter 3 entsprechend den Figuren 5 bis 9 ausgebildet sein können. In Fig. 16 sind ferner getrennt durch die Schnittlinien XIX, XXII und XXV die verschiedenen Betriebszustände und die entsprechend verschiedenen Stellungen der einzelnen Bauteile gezeigt.

Für gleiche bzw. gleichwirkende Bauteile bei dieser Ausführungsform wurden die gleichen Bezugszeichen wie der zuvor beschriebenen Ausführungsform verwendet, so daß hinsichtlich von nicht nochmals im einzelnen erläuterten technischen Details auf die obenstehende Beschreibung des ersten Ausführungsbeispiels der erfindungsgemäßen Vorrichtung verwiesen werden kann.

Bei dieser Ausführungsform ist die untere Druckplatte 23 ebenfalls beweglich ausgebildet und dient dazu, nach Erreichen des angestrebten hydrostatischen Entwässerungsdrucks, welcher durch die Volumenvordrängung mittels der Zwischenbehälter 3 eingestellt wird, einen zusätzlichen mechanischen Entwässerungsdruck durch Verkleinerung der Höhe der Schlammkammern 20 zu erzeugen. Zu diesem Zweck ist die untere Druckplatte 23 auf eine Anzahl der oben erwähnten Hochdruckerzeuger 33 gelagert, welche wie bei dem Ausführungsbeispiel gemäß Figur 16 bis 27 entweder in zwei Reihen längs der Längskanten der unteren Druckplatte 23 angeordnet sein können, oder welche, wie oben beschrieben, als hydraulisches Bett 32 ausgebildet sein können.

Wie aus Fig. 17 ersichtlich, ist jede Schlammkammer 20 im Umriß bevorzugt oval ausgebildet, so daß keine Ecken und dergleichen mit entsprechenden Druckspitzen entstehen.

Ferner zeigt Fig. 17 in der oberen Hälfte, wie die Schlammeinlässe 19 in der Dichtung 28 angeordnet und ausgebildet sind, und daß jedem der Schlammeinlässe 19 eine eigene Verbindungsleitung 18 zugeordnet ist, welche getrennt mit einem Schlammauslaß 17 eines Zwischenbehälters 3 verbunden ist.

Aus Fig. 19 sind ferner Einzelheiten des Einbaus einer Zwischenplatte 63 ersichtlich. Wie gezeigt, ist die Zwischenplatte 63 mittels oberer Mitnehmer 71 an der oberen Druckplatte 22 aufgehängt und durch untere Mitnehmer 72, welche mit der unteren Druckplatte 23 verbunden sind, geführt. Diese Art des Einbaus ermöglicht, wie sich aus der folgenden Beschreibung der Funktionsweise noch ergibt, die verschiedenen Relativbewegungen der Einzelteile zueinander.

Aus Fig. 21 ist ferner noch ersichtlich, daß bei diesem Ausführungsbeispiel die Anschläge 59 ebenfalls den geänderten Anforderungen dieser Ausführungsform angepaßt sind, indem die Anschläge 59 einen Oberteil 73 aufweisen, welcher entweder federnd in den Anschlag 59 hindrückbar ist oder Teil eines entsprechend absenkbaren Hydraulikzylinders bildet.

Im folgenden wird die Arbeitsweise der Filterpresse 4 gemäß den Figuren 16 bis 27 unter Bezugnahme auf die Figuren 19 bis 27 näher erläutert.

Die Figuren 19 bis 22 zeigen den geöffneten Zustand der Schlammkammern 20, wobei die Hubzylinder 42 die obere Druckplatte 22 nach oben angehoben haben. Die Sperrklinken 55 sind hierbei geöffnet, indem diese durch die Pneumatikzylinder 57 in die geöffnete Stellung verschwenkt wurden.

Beim Anheben der oberen Druckplatte 22 wurde zunächst die Dichtung 28 der oberen Schlammkammer 20 von der Oberseite der Zwischenplatte 63 durch die Mitnehmer 62 abgehoben und anschließend die gesamte Zwischenplatte 63 durch die Mitnehmer 71 samt ihrer dazugehörigen Dichtung 28 von der unteren Druckplatte 23 weg nach oben bewegt, wobei die dazugehörige Dichtung 28 der Zwischenplatte 63 durch die Mitnehmer 62 der Zwischenplatte 63 ebenfalls mitgenommen wurde.

Die Hochdruckerzeuger 33 wurden gleichzeitig entlastet, so daß sich in dem in Fig. 19 dargestellten Zustand die untere Druckplatte 23 ebenfalls gesenkt hat, was dadurch unterstützt wird, daß diese ja die Reaktionskräfte der Hubzylinder 42 aufnimmt.

Die Anschläge 59 sind in diesem Zustand ebenfalls entlastet und nehmen die in Fig. 21 gezeigte Stellung ein, in welcher die Oberteile 73 die Höhe der geschlossenen Schlammkammern definieren.

In diesem Zustand steht die Filterpresse 43 bereit, den in einem vorausgehenden Zyklus gebildeten Filterkuchen 94 aus den Schlammkammern 20 auszutragen. Zu diesem Zweck werden nunmehr die dem Austragsende 45 der Filterpresse 4 zugeordneten Wickelantriebe 44, 51 und 67, 68 betätigt, während die dem anderen Ende der Filterpresse zugeordneten Wickelantriebe 43, 50 und 67, 69 freigegeben sind. Die Filterbänder 26, 27 und 65, 66 synchron aus den Schlammkammern 20 herausgefahren und nach Abwurf der Filterkuchen 74 werden die Wickelantriebe 44, 51 und 68, 70 freigegeben und die Wickelantriebe 43, 50, 67 und 69 betätigt, so daß die Filterbänder 26, 27 und 65, 66 wiederum synchron in die Schlammkammern 20 zurückgefahren werden. Gleichzeitig erfolgt mittels der Waschdüsen 49 eine Reinigung der Filterbänder. Am Ende dieses Vorgangs steht die Filterpresse 4 wieder in dem Zustand gemäß Fig. 19, wobei jedoch in den Schlammkammern 20 kein Filterkuchen 94 enthalten ist.

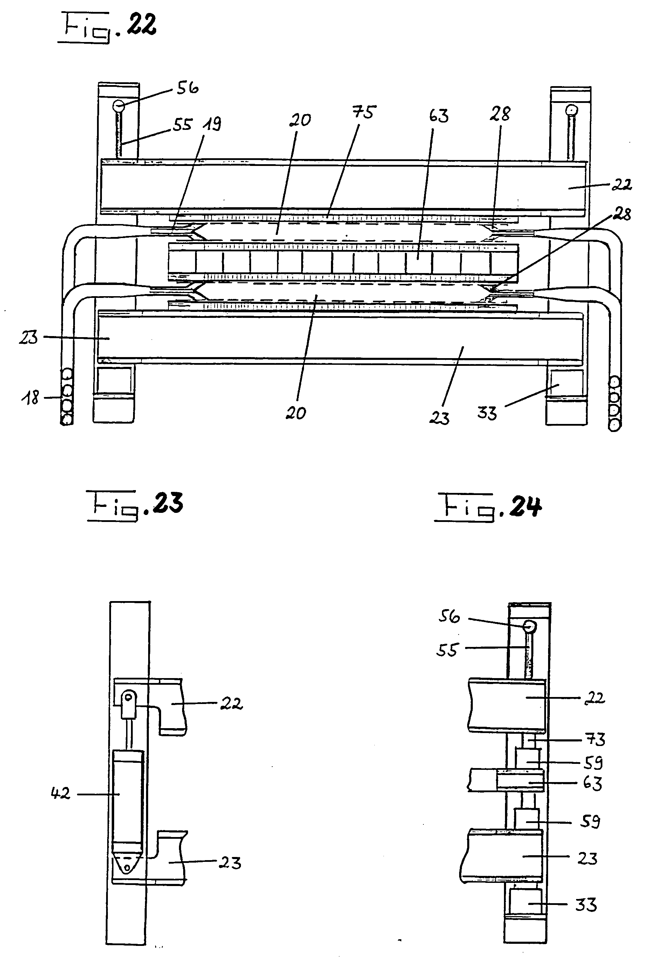

Anschließend wird die Filterpresse 4 in den Zustand gemäß den Figuren 22 bis 24 überführt, wobei die Schlammkammern 20 geschlossen werden. Zu diesem Zweck werden die Hubzylinder 42 entlastet und senken unter Mitnahme der Dichtungen 28 und der Zwischenplatte 63 die obere Druckplatte 22 auf die untere Druckplatte 23 ab. Die Hochdruckerzeuger 33 verbleiben in dem entlasteten Zustand.

Die obere Druckplatte 22 und die Zwischenplatte 63 werden soweit abgesenkt, bis sie in Eingriff mit den Oberteilen 73 der Anschläge 59 gelangen. In diesem Zustand werden die Sperrklinken 55 durch Betätigung der Pneumatikzylinder 57 verriegelt und werden in die in Fig. 22 dargestellte Stellung verschwenkt, in welcher der Abstand zwischen der oberen Druckplatte 22 und der unteren Druckplatte 23 mechanisch fixiert und durch die Anschläge 59 festgelegt ist. In diesem Zustand sind die Dichtungen 28 der Schlammkammern 20 dichtend zusammengepreßt, wobei die obere Schlammkammer 20 oben und unten durch das Filterband 26 und das Filterband 65 der Zwischenplatte 63 geschlossen ist, und die untere Schlammkammer 20 oben und unten durch das untere Filterband 66 der Zwischenplatte 63 und das Filterband 27 der unteren Druckplatte 23 geschlossen ist. In diesem Zustand sind die Sperrventile 12, welche die Zwischenbehälter 3 mit dem Ausgleichsbehälter 5 verbinden, geschlossen, und es werden nunmehr die Sperrventile 21 geöffnet, so daß der in den Zwischenbehältern 3 befindliche Schlamm durch Bewegung der Kolben 14 in die Schlammkammern 20 eingespeist und ein hydrostatischer Entwässerungsdruck aufgebaut wird.

Mit dem ansteigenden Druck wird das in dem Schlamm enthaltene Filtrat nach außen durch die Filterbänder 26, 27 und 65, 66 in die Kanäle in den Lagerplatten 31 gedrückt und wird aufgrund der zur Hauptachse der Schlammkammer 20 parallelen Anordnung der Kanäle 75 und aufgrund des Gefälles entgegen der Austragsrichtung an der Stirnseite aus der Filterpresse 4 herausgeführt.

Nach Erreichen des gewünschten hydrostatischen Drucks in den Schlammkammern, beispielsweise nach Erreichen von 5 bar werden die Sperrventile 21 erneut geschlossen, und anschließend die Sperrventile 12 geöffnet, wobei die Kolben 14 zurückgefahren werden und ein neues Schlammvolumen in die Zwischenbehälter 3 übernehmen.

Anschließend werden die Hochdruckerzeuger 33 betätigt, um auf mechanischem Wege das Volumen der Schlammkammern 20 in vertikaler Richtung zu verringern und somit einen möglicherweise erheblich über dem hydostatischen Entwässerungsdruck liegenden zusätzlichen, mechanischen Entwässerungsdruck zu erzeugen. Dieser Vorgang ist in den Figuren 25 bis 27 dargestellt, wobei die Hochdruckerzeuger 33 in ihrer vollständig ausgefahrenen Lage veranschaulicht sind, in welcher der höchste Entwässerungsdruck erreicht wurde. In diesem Zustand sind die Sperrklinken 55 weiterhin geschlossen, und es wurde die untere Druckplatte 23 durch die Hochdruckerzeuger 33 nach oben gegen die obere Druckplatte 22 bewegt. Wie gezeigt, wurden bei diesem Vorgang die Oberteile 73 der Anschläge 59 in die Anschläge 59 hineingedrückt, um die Verringerung des Abstandes zwischen der unteren Druckplatte 23 und der Zwischenplatte 63 sowie der Zwischenplatte 63 und der oberen Druckplatte 22 zu ermöglichen. Figur 25 zeigt hierbei, wie die Mitnehmer 62 bzw. 71 und 72 diese Relativbewegungen ermöglichen.

Nachdem die gewünschte Entwässerung des Schlamms in den Schlammkammern 20 erreicht wurde, werden die Hochdruckerzeuger 33 entlastet, die Sperrklinken 55 geöffnet und die Hubzylinder 42 betätigt, wonach dann der in den Figuren 17 bis 19 dargestellte Zustand erreicht wurde. Die Filterpresse 4 ist somit bereit, für den weiteren Beginn eines Zyklusses, welcher, wie oben beschrieben, mit dem Ausfahren und Abwerfen der hergestellten Filterkuchen 74 beginnt.

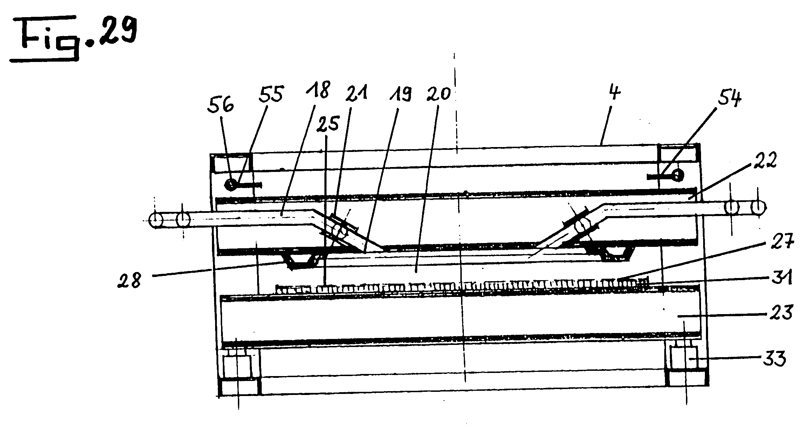

In den Figuren 28 und 29 ist eine weitere Ausführungsform der Filterpresse 4 in einer seitlichen schematischen Ansicht bzw. einer Schnittansicht längs der Linie 29 XXIX von Figur 28 veranschaulicht, wie sie bereits prinzipiell in den Figuren 5 bis 7 dargestellt wurde. Bei der in den Figuren 28 und 29 veranschaulichten Ausführungsform handelt es sich um eine besonders einfach aufgebaute Ausführungsform mit lediglich einer Schlammkammer 20.

Für gleiche bzw. gleichwirkende Bauteile bei dieser Ausführungsform wurden die gleichen Bezugszeichen wie bei den zuvor beschriebenen Ausführungsformen verwendet, so daß hinsichtlich der nicht nochmals im einzelnen erläuterten technischen Details auf die obenstehende Beschreibung der beiden ersten Ausführungsbeispiele der erfindungsgemäßen Vorrichtung verwiesen werden kann.

Bei dieser Ausführungsform weist die Schlammkammer 20 lediglich eine Filterfläche 25 auf, welche durch das untere Filterband 27 auf der Lagerplatte 31 gebildet ist. Die Schlammkammer 20 wird auf der Oberseite durch die Dichtung 28 an der oberen Druckplatte 22 und die Druckplatte 22 selbst umschlossen. Hinsichtlich der für den Verfahrensablauf erforderlichen Bewegungen und Verriegelungen sowie die Bewegung des Filterbandes 27 und der Erzeugung des mechanischen Entwässerungsdrucks sind die gleichen konstruktiven Merkmale vorgesehen, wie bei der zuvor beschriebenen Ausführungsform.

Da jedoch die Schlammkammer 20 auf der Oberseite durch die Druckplatte 22 direkt begrenzt wird, sind die Schlammeinlässe 19 unmittelbar in der oberen Druckplatte 22 vorgesehen. Die Steuerventile 21 sind ebenfalls in der oberen Druckplatte 22 in den Leitungen 18 angeordnet, so daß hierdurch das durch den mechanischen Entwässerungsdruck beaufschlagte Schlammvolumen in den Leitungen 18 verringert wird. Hinsichtlich der weiteren Details darf auf die obenstehende Beschreibung verwiesen werden.

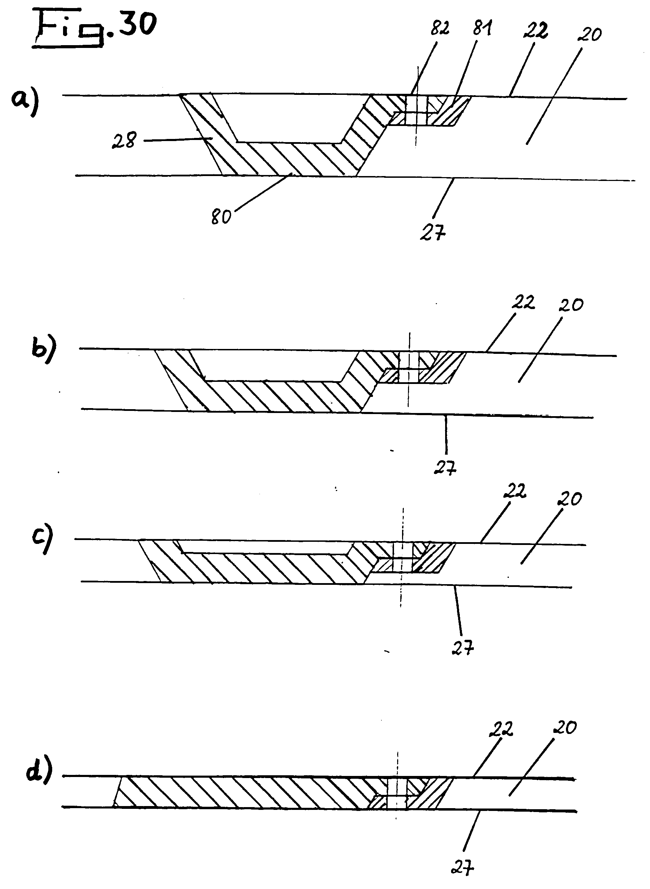

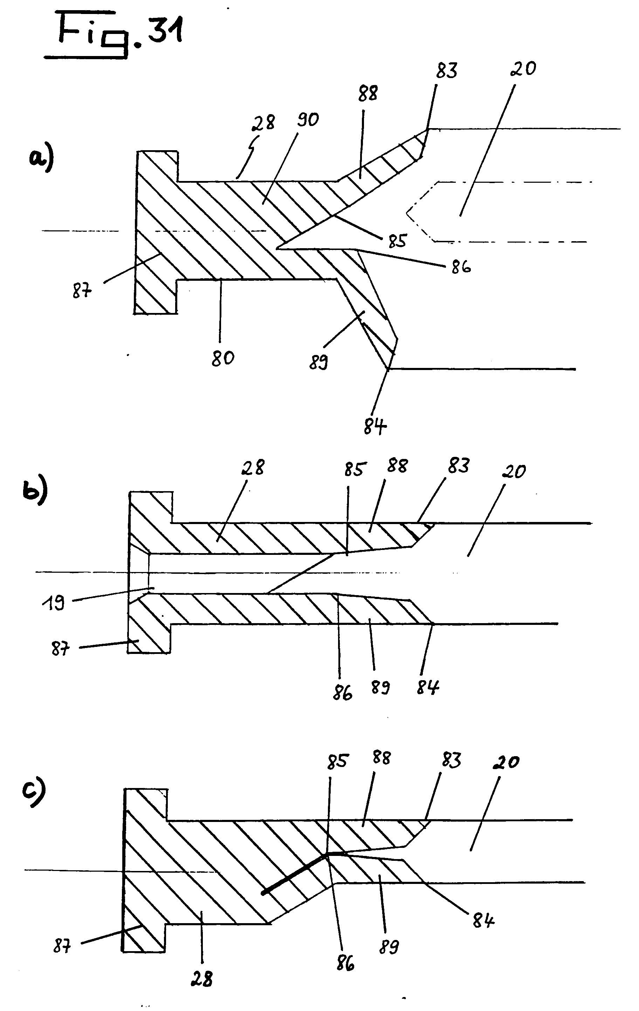

In den Figuren 30 und 31 sind in Schnittansichten noch besonders bevorzugte Ausführungsformen der Dichtung 28 dargestellt, welche allgemein zum seitlichen Abdichten von in vertikaler Richtung im Volumen verkleinerbaren Druckkammern geeignet sind.

Bei der in Figur 30 veranschaulichten Ausführungsform der Dichtung 28, handelt es sich um eine Ausführungsform, wie sie bei der Filterpresse gemäß den Figuren 28 und 29 besonders zweckdienlich ist. In Figur 30 sind die verschiedenen Betriebszustände der Dichtung gemäß a bis d gezeigt, wobei in a diejenige Stellung veranschaulicht ist, in welcher die Schlammkammer 20 geschlossen ist und der hydrostatische Druck mittels der Zwischenbehälter 3 aufgebaut wird. Die Figuren 30 b bis 30 d zeigen die fortschreitende Verformung der Dichtung 28, während der Erzeugung des mechanischen Entwässerungsdrucks in der Filterpresse 4.

Wie gezeigt besteht die Dichtung 28 aus einem einstückigen, den Umfang der Druckkammer, d.h. beim Ausführungsbeispiel der Schlammkammer 20 umgebenden elastischen Körper aus Gummi oder einem anderen geeigneten Werkstoff.

Der Körper 80 weist in dem in Figur 30 a gezeigten quasi noch entspannten Zustand im Querschnitt eine etwa schalenförmige Form auf, welche zwischen den Zuständen a bis d in eine praktisch ebene Gestalt überführt werden kann. Die Dichtung 28 ist an der oberen Druckplatte 22 durch einen Rahmen 81 mittels Bolzen 82 befestigt, wobei der Rahmen 81 gleichzeitig einen Anschlag für die maximale Schließbewegung der Druckkammer 20 darstellt.

Wie gezeigt ist durch die Abschrägung des Profils sowohl der Dichtung 28 als auch des Rahmens 81 gewährleistet, daß bei Verkleinerung des Volumens der Druckkammer 20 der nahe der Dichtung 28 befindliche Schlamm verdrängt und in Richtung des Inneren der Druckkammer 20 bewegt wird.

In Figur 31 ist eine Ausführungsform der Dichtung 28 veranschaulicht, wie sie bei Druckkammern miteinander gegenüberliegenden Filterflächen zweckdienlich ist. Figur 31 zeigt hierbei drei verschiedene Betriebszustände der Dichtung 28, wobei in dem mittleren Betriebszustand b gleichzeitig der durch die Dichtung 28 hindurch führende Schlammeinlaß 19 in die Schlammkammer 20 gezeigt ist.

Auch bei dieser Ausführungsform besteht die Dichtung 28 aus einem einstückigen den Umfang der Druckkammer, beim Ausführungsbeispiel der Schlammkammer 20 umgebenden elastischen Körper aus Gummi oder einem anderen geeigeneten Werkstoff.

Der Körper 80 weist in dem in Figur 31 a veranschaulichten, praktisch entspannten Zustand, im Querschnitt die Form eines liegenden V auf, dessen Spitze von der Schlammkammer 20 weg nach außen gerichtet ist. Die freien Schenkel 88 und 89 des V bilden jeweils eine Dichtlippe 83 bzw. 84, die an der zugehörigen Filterfläche anliegt.

In dem in Figur 31 a gezeigten, praktisch entspannten Zustand der Dichtung 28, wie er beim Aufbau des hydrostatischen Drucks in der Schlammkammer 20 praktisch vorliegt, ist im horizontalen und vertikalen Abstand zu den Dichtlippen 83, 84 auf der Innenseite des V an jedem der Schenkel 88 und 89 eine Knickstelle 85 bzw. 86 vorgesehen, an welcher sich der zwischen den Schenkeln des V eingeschlossene Winkel vergrößert. Hierbei beträgt die Winkelvergrößerung an der Knickstelle 86 ein Vielfaches der Winkelvergrößerung an der Knickstelle 85, da beim Aufbau des mechanischen Entwässerungsdrucks in der Schlammkammer 20 die untere Filterfläche auf die obere Filterfläche zu bewegt wird. Der symetrische Teil des V liegt in einem Abschnitt 90 des Querschnitts der Dichtung 28, welcher praktisch rechteckig ist und bildet in diesem Abschnitt 90 einen Einschnitt, wobei der untere Schenkel des symetrischen Teils des V parallel zur Seitenkante des Rechtecks verläuft.

Zur Halterung der Dichtung 28 ist der rechteckige Abschnitt 90 mit einem umlaufenden Einspann- oder Befestigungsvorsprung 87 versehen, welcher beim Ausführungsbeispiel der Vorrichtung nach der vorliegenden Erfindung in den Hilfsrahmen 60 eingespannt ist. Wie es im Rahmen der vorliegenden Erfindung verwendet wird, beträgt der vertikale Abstand zwischen den Dichtlippen 83 und 84 in ihrem entspannten Zustand etwa, 80 mm. Wenn die Schlammkammer 20 geschlossen wurde um anschließend den hydrostatischen Druck aufzubauen, beträgt der Abstand zwischen den Dichtlippen 83 und 84 dann etwa 60 mm. Wird nach Erreichen des hydrostatischen Entwässerungsdrucks auf die zusätzliche mechanische Entwässerung umgeschaltet, so kann die Dichtung 28 bei diesem Vorgang soweit zusammengedrückt werden, daß der Abstand zwischen den Dichtlippen 83 und 84 lediglich noch etwa 30 bis 35 mm beträgt, wie dies in Figur 3 c dargestellt ist. Wie sich aus dem Vergleich von den Figuren 31 a mit b und c ergibt, bewegen sich bei diesem Vorgang die beiden freien Schenkel 88 und 89 vor den Knickstellen 85 und 86 aufeinander zu bis sie den Zustand gemäß b erreichen, wobei dann der untere Schenkel des V praktisch parallel zu den Filterflächen verläuft, während der obere Schenkel des V lediglich vor der Knickstelle 85 hierzu parallel verläuft. Bei dem letzten Schließhub der beiden Filterflächen aufeinander zu, wird dann der symetrische Teil des V außerhalb der Knickstellen 85, 86 geschlossen, wobei durch diesen gesamten Bewegungsablauf gleichzeitig der Filterkuchen aus dem Zwischenraum zwischen den beiden freien Schenkeln 81 und 82 herausgedrückt wird. Beim öffnen der Schlammkammer 20 kann sich dann aufgrund der besonderen Gestaltung des Querschnitts der Dichtung 28 der Filterkuchen leicht von dem Bereich vor den Knickstellen 85 und 86 lösen.

Es wurden obenstehend mehrere Ausführungsformen der Erfindung in Einzelheiten beschrieben, wobei jedoch dem Fachmann sicher Abänderungen und Abwandlungen offensichtlich sind, die innerhalb des Grundgedankens der Erfindung liegen.

Sämtliche aus der Beschreibung, den Ansprüchen und Zeichnungen hervorgehenden Merkmale und Vorteile der Erfindung, einschließlich konstruktiver Einzelheiten und räumlicher Anordnungen, können sowohl für sich als auch in beliebiger Kombination erfindungswesentlich sein.

### BEZUGSZEICHENLISTE

- 1: Vorrichtung
- 2: Vorentwässerungsstufe
- 3: Zwischenbehälter
- 4: Filterpresse
- 5: Ausgleichsbehälter
- 6: Kontinuierliche Schlammzufuhr
- 7: Filterkorb
- 8: Filtratauslaß
- 9: Schlamm
- 10: Schlammauslaßleitung
- 10a: Schlammauslaß von 5
- 11: Schlammeinlaß von 3
- 12: Sperr- und Steuerventil
- 13: Zylindergehäuse
- 14: Kolben
- 15: Antrieb von 14
- 16: Hydraulikkolben
- 17: Schlammauslaß v. 3
- 18: Leitung
- 19: Schlammeinlaß von 20
- 20: Schlammkammer von 4
- 21: Sperr- und Steuerventil
- 22: Obere Druckplatte
- 23: Untere Druckplatte
- 24: Obere Filterfläche
- 25: Untere Filterfläche
- 26: Oberes Filterband
- 27: Unteres Filterband
- 28: Dichtung
- 29: Oberer Schlammspiegel in 2
- 30: Unterer Schlammspiegel in 2
- 31: Lagerplatten
- 32: Hydraulisches Bett
- 33: Hochdruckerzeuger
- 34: Antrieb von 35, 38
- 35: Abstreifer
- 35a: Stange
- 36: E-Motor
- 37: Stirnradgetriebe
- 38: Wascheinrichtung
- 38a: Waschdüse
- 38b: Bürste
- 39: Pfeile
- 40: Mischer
- 40a: Misch- und Förderschnecke
- 40b: Dosiereinrichtung
- 41: Motor
- 42: Hubzylinder
- 43: Wickelantrieb
- 44: Wickelantrieb
- 45: Austragsende
- 46: Umlenkwalze
- 47: Abstreifer
- 48: Antrieb v. 49
- 49: Waschdüse
- 50: Wickelantrieb
- 51: Wickelantrieb
- 52: Umlenkwalze
- 53: Abstreifer
- 54: Sperrklinkenvorrichtung
- 55: Sperrklinken
- 56: Achsen
- 57: Pneumatikzylinder
- 58: Hebelantrieb
- 59: Anschläge
- 60: Hilfsrahmen
- 61: Schubstange
- 62: Mitnehmer
- 63: Zwischenplatte
- 64: Trägerplatte
- 65: Oberes Filterband
- 66: Unteres Filterband
- 67: Wickelantrieb
- 68: Wickelantrieb
- 69: Wickelantrieb
- 70: Wickelantrieb
- 71: Mitnehmer von 63
- 72: Mitnehmer von 63
- 73: Oberteil von 59
- 74: Filterkuchen
- 75: Kanäle in 31
- 80: Elastischer Körper 80
- 81: Rahmen
- 82: Bolzen
- 83: Dichtlippe
- 84: Dichtlippe
- 85: Knickstelle
- 86: Knickstelle
- 87: Befestigungsvorsprung
- 88: Ende
- 89: Ende
- 90: Abschnitt
- 103: Schmiermittelbehälter
- 104: Leitung
- 105: Einlaß
- 106: Ventil
- 116: Kolbenstange
- 117: Zylinder

## Patentansprüche

1. Verfahren zum Entwässern von Schlamm und ähnlichen Substanzen, bei dem der Schlamm unter Druck in eine mindestens eine Filterfläche aufweisende, geschlossene Schlammkammer eingespeist, und in der Schlammkammer ein die Entwässerung herbeiführender hydrostatischer Druck aufgebaut wird, wobei nach erfolgter Entwässerung zum Abfördern des hergestellten Filterkuchens die Schlammkammer geöffnet und die Filterflächen mit dem Filterkuchen aus der Schlammkammer herausbewegt werden, **dadurch gekennzeichnet**, daß der Schlamm in mindestens einen mit der Schlammkammer in Verbindung stehenden Zwischenbehälter eingebracht wird, daß die Zwischenbehälter eine Schlammenge aufnehmen, die etwa dem Zweifachen des Volumens der Schlammkammer entspricht, daß danach die Schlammzufuhr zum Zwischenbehälter getrennt wird, daß anschließend die Schlammkammer durch positive Verdrängung eines Schlammvolumens aus dem Zwischenbehälter gefüllt wird, daß nach dem Füllen der Schlammkammer der hydrostatische Druck durch positive Verdrängung des das Volumen der Schlammkammer übersteigenden Teils der Füllung des Zwischenbehälters erzeugt wird, und daß hierbei je nach spezifischem Entwässerungsverhalten des Schlamms ein hydrostatischer Druck von etwa 5 bis 10 bar erzeugt wird.

2. Verfahren nach Anspruch 1, dadurch gekennzeichnet, daß die Schlammzufuhr zu dem Zwischenbehälter über einen Ausgleichsbehälter erfolgt, welcher kontinuierlich mit Schlamm befüllt wird, daß in dem Ausgleichsbehälter eine Vorentwässerung des Schlamms durchgeführt wird, und daß der Schlamm in die Schlammkammer an mehreren Punkten gleichzeitig aus einer der Anzahl dieser Punkte entsprechenden Anzahl von Zwischenbehältern eingeleitet wird.

3. Verfahren nach der Anspruch 1 oder 2, dadurch gekennzeichnet, daß nach Erreichen eines festlegbaren hydrostatischen Drucks in der Schlammkammer diese von dem Zwischenbehälter getrennt wird und daß danach das Volumen der Schlammkammer verkleinert wird und ein mechanischer Entwässerungsdruck erzeugt wird, welcher größer ist als der zuvor erreichte hydrostatische Druck.

4. Vorrichtung zur Durchführung des Verfahrens nach einem der vorstehenden Ansprüche mit mindestens einer allseitig geschlossenen Schlammkammer, welche Filterflächen und einen Schlammeinlaß aufweist, der mit einer einen hydrostatischen Filtrationsdruck erzeugenden Einrichtung verbunden ist, wobei die Filterflächen zwischen relativ zueinander beweglichen Druckplatten angeordnet sind, und die Filterflächen zum Austragen des Filterkuchens nach Öffnen der Druckplatten bezüglich der Schlammkammer verschiebbar ausgebildet sind, dadurch gekennzeichnet, daß die Einrichtung zur Erzeugung des hydrostatischen Filtrationsdrucks als ein oder mehrere Zwischenbehälter (3) ausgebildet ist, daß der Zwischenbehälter (3) als Kolbenzylindereinheit (13, 14) mit einem Zylindergehäuse (13) und einem darin verschiebbaren Kolben 14) und einem Antrieb (15) für den Kolben (14) ausgebildet ist, wobei jede Kolbenzylindereinheit (13, 14) einen Schlammeinlaß (11) und einen mit der Schlammkammer (20) in Verbindung stehenden Schlammauslaß (17) aufweist, daß am Schlammeinlaß (11) und an Schlammauslaß (17) alternierend betätigbare Sperr- und Steuerventile (12, 21) vorgesehen sind, und daß das Volumen des oder der Zwischenbehälter (3) etwa dem zweifachen Volumen der Schlammkammer (20) entspricht.

5. Vorrichtung nach Anspruch 4, dadurch gekennzeichnet, daß die Schlammkammer (20) mehrere Schlammeinlässe (19) aufweist, daß eine entsprechende Anzahl von Zwischenbehältern (3) vorgesehen ist, bei denen jeder Schlammauslaß (17) durch eine separate Verbindungsleitung (18, 18') mit einem der Schlammeinlässe (19) der Schlammkammer (20) verbunden ist, und daß die Sperr- und Steuerventile (12, 21) als Kugelhähne ausgebildet sind.

6. Vorrichtung nach Anspruch 4 oder 5, dadurch gekennzeichnet, daß die Filterflächen (24, 25) durch geradlinig hin und her verschiebbare Filterbänder (26, 27, 65, 66) gebildet sind.

7. Vorrichtung nach einem der Ansprüche 4 bis 6, dadurch gekennzeichnet, daß die Schlammkammer (20) durch eine obere und eine untere Filterfläche (24, 25) gebildet ist, zwischen denen eine die Schlammkammer (20) umgebende flexible Dichtung (28) angeordnet ist, daß die Dichtung (28) an einem Hilfsrahmen (60) befestigt ist, daß der Hilfsrahmen (60) durch Mitnehmer (62) beweglich an der oberen Druckplatte (22) aufgehängt ist, und daß die Schlammkammer (20) einen ovalen Umriß aufweist.

8. Vorrichtung nach einem der Ansprüche 4 bis 7, dadurch gekennzeichnet, daß außerhalb der Schlammkammer (20) jede Filterfläche (24, 25) auf einer Lagerplatte (31) abgestützt ist, welche mit zur Filterfläche (24, 25) offenen Kanälen (75) versehen ist, daß die Schlammkammer (20) mit den Filterflächen (24, 25) geneigt in Längsrichtung angeordnet ist, daß die Neigung einem Gefälle der Filterflächen (24, 25) von etwa 10° entspricht, und daß die Kanäle (75) parallel zur Hauptachse der Schlammkammer (20) in Längsrichtung geradlinig ausgebildet sind.

9. Vorrichtung nach einem der Ansprüche 4 bis 8, dadurch gekennzeichnet, daß die untere Druckplatte (23) auf Hochdruckerzeugern (33) abgestützt ist, mittels derer das Volumen der Schlammkammer (20) nach Erreichen des hydrostatischen Entwässerungsdrucks zur Erzeugung eines zusätzlichen mechanischen Entwässerungsdrucks verkleinerbar ist.

10. Vorrichtung nach Anspruch 9, dadurch gekennzeichnet, daß die untere Druckplatte (23) als hydraulisches Bett (32) ausgebildet ist, indem nebeneinander eine Anzahl von Hochdruckerzeugern (33) über die Länge und/oder Breite der unteren Druckplatte (23) verteilt angeordnet sind, und daß die Hochdruckerzeuger in mehreren parallelen Reihen innerhalb des ovalen Umfangs der Schlammkammer (20) angeordnet sind, wobei die Hochdruckerzeuger (33) benachbarter Reihen gegeneinander versetzt sind.

11. Vorrichtung nach Anspruch 9, dadurch gekennzeichnet, daß die Hochdruckerzeuger (33) seitlich außerhalb des Bereichs der Schlammkammer (20) angeordnet sind.

12. Vorrichtung nach einem der Ansprüche 9 bis 11, dadurch gekennzeichnet, daß die Hochdruckerzeuger (33) als hydraulische Einfachzylinder ausgebildet sind.

13. Vorrichtung nach einem der Ansprüche 4 bis 12, dadurch gekennzeichnet, daß die geschlossene Stellung der Schlammkammer (20) mechanisch verriegelbar ist, daß zur Verriegelung eine auf die obere Druckplatte (22) wirkende Sperrklinkenvorrichtung (54) vorgesehen ist.

14. Vorrichtung nach einem der Ansprüche 4 bis 13, dadurch gekennzeichnet, daß mehrere Schlammkammern (20) übereinander angeordnet sind, und daß zur Herstellung jeweils einer weiteren Schlammkammer (20) zwischen der oberen und der unteren Druckplatte (22, 23) eine Zwischenplatte (63) vorgesehen ist, welche auf ihrer Ober- und Unterseite eine Lagerplatte (31) und je ein Filterband (65, 66) aufweist, wobei ferner auf der Unterseite ein Hilfsrahmen (60) mit Dichtung (28) aufgehängt ist.

15. Vorrichtung nach einem der Ansprüche 4 bis 14, dadurch gekennzeichnet, daß vor der oder den Kolbenzylindereinheiten (13, 14) eine Vorentwässerungseinrichtung (2) vorgesehen ist, deren Schlammauslaß (10) mit dem Schlammeinlaß (11) der Kolbenzylindereinheiten (13, 14) verbunden ist, daß die Vorentwässerungseinrichtung (2) als Ausgleichsbehälter (5) ausgebildet ist, deren Einlaß an eine kontinuierliche Schlammzufuhr (6) angeschlossen ist, und daß die Vorentwässerungseinrichtung (2) ein oder mehrere in den Schlamm des Ausgleichsbehälters (5) eingetauchte Filterkörbe (7) aufweist, welche mit einem Filtratauslaß (8) versehen sind.

16. Vorrichtung nach Anspruch 15, dadurch gekennzeichnet, daß der Filterkorb (7) ortsfest angeordnet ist, und daß ein oder mehrere über die Höhe des Filterkorbs (7) reichende Bürsten (38b) vorgesehen sind, welche auf der Filtratseite des Filterkorbs (7) umlaufen.

17. Vorrichtung nach einem der Ansprüche 4 bis 16, dadurch gekennzeichnet, daß zwischen den Druckplatten (22, 23) und/oder Zwischenplatten (63) die Höhe der Schlammkammer (20) festlegende Anschläge (59) vorgesehen sind, und daß die Anschläge (59) entsprechend der Volumenverkleinerung der Schlammkammer (20) zusammendrückbar oder federnd ausgebildet sind.

18. Vorrichtung nach einem der Ansprüche 4 bis 17, dadurch gekennzeichnet, daß die Dichtung (28) aus einem einstückigen, den Umfang der Druckkammer (20) umgebenden elastischen Körper (80) aus Gummi oder dergleichen besteht, daß der Körper (80) im Querschnitt die Form eines liegenden V aufweist, dessen Spitze von der Druckkammer weg nach außen gerichtet ist, daß die freien Enden (81, 82) des V je eine Dichtlippe (83, 84) bilden, und daß im horizontalen und vertikalen Abstand zu den Dichtlippen (83, 84) auf der Innenseite des V zwei einander gegenüberliegende Knickstellen (85, 86) vorgesehen sind, an welchen sich der zwischen den Schenkeln eingeschlossene Winkel vergrößert.

19. Vorrichtung nach Anspruch 18, dadurch gekennzeichnet, daß der untere Schenkel des V parallel zum Boden der Druckkammer (20) verläuft, daß die Knickstellen (85, 86) asymmetrisch ausgebildet sind, indem die Winkelvergrößerung an der unteren Knickstelle (86) ein Vielfaches der Winkelvergrösserung an der oberen Knickstelle (85) beträgt, daß der symmetrische Teil des V vor den Knickstellen (85, 86) als Einschnitt in einem Bereich der Dichtung (28) mit rechteckigem Querschnitt ausgebildet ist, und daß die Spitze des V außen mit einem umlaufenden Einspann- oder Befestigungsvorsprung (87) verbunden ist.

## Claims

1. A method for dewatering of sludge and similar substances in which the sludge under pressure is fed into a closed sludge chamber, containing at least one filter area, wherein in the sludge chamber a hydrostatic pressure is created to obtain the dewatering, wherein after the dewatering for removing the produced filter cake, the sludge chamber is opened and the filter areas with the filter cake are moved out of the sludge chamber, characterized in that the sludge is fed into at least one intermediate container communicating with the sludge chamber, in that the intermediate containers are receiving an amount of the sludge, corresponding to about the double of the volume of the sludge chamber, in that thereafter the sludge feed is separated from the intermediate container, in that thereafter the sludge chamber is filled by positive displacement of a sludge volume from the intermediate container, in that after filling the sludge chamber the hydrostatic pressure is created by positive displacement of the part of the filling of the intermediate container exceeding the volume of the sludge chamber and in that therein corresponding to the specific dewatering behaviour of the sludge a hydrostatic pressure of about five to ten bar is created.

2. A method according to claim 1, characterized in that the sludge feed to the intermediate container is performed via a compensation container, which continuously is filled with the sludge, in that in the compensating container a pre-dewatering of the sludge is performed and, in that the sludge simultaneously is fed into the sludge chamber at several points from a number of intermediate containers, corresponding to the number of said points.

3. A method according to claim 1 or 2, characterized in that after reaching a selectable hydrostatic pressure in the sludge chamber, the sludge chamber is separated from the intermediate container and, in that thereafter the volume of the sludge chamber is decreased and a mechanic dewatering pressure is created which is higher than the previously reached hydrostatic pressure.

4. Apparatus for performing the method according to any of the preceding claims, having at least one sludge chamber closed on all sides containing filter areas and a sludge inlet which is connected to a means for creating a hydrostatic filtration pressure, wherein the filter areas are positioned between pressure plates being movable relatively to each other and, wherein the filter areas for removing the filter cake after the opening of the pressure plates are displaceable with respect to the sludge chamber, characterized in that the means for creating the hydrostatic filtration pressure is performed as one or more intermediate containers (3), in that the intermediate container (3) is formed as a piston-cylinder unit (13, 14), having a cylinder housing (13) and a piston (14) movable therein and a drive (15) for the piston (14), wherein each piston-cylinder unit (13, 14) is having one sludge inlet (11) and one sludge outlet (17) in communication with the sludge chamber (20), in that at the sludge inlet (11) and at the sludge outlet (17) alternatedly operable closing and controlling valves (12, 21) are provided and, in that the volume of the one or more intermediate containers (13) is corresponding about the double volume of the sludge chamber (20).

5. Apparatus according to claim 4, characterized in that the sludge chamber (20) is having a plurality of sludge inlets (19), in that a corresponding number of intermediate containers (3) is provided, wherein each sludge inlet (12) by a separate connecting line (18, 18') is connected with one of the sludge inlets (19) of the sludge chamber (20) and, in that the closing and control valves (12, 21) are performed as ball-cocks.

6. Apparatus according to claim 4 or 5, characterized in that the filter areas (24, 25) are performed as rectilinearly reciprocable filter belts (26, 27, 65, 66).

7. Apparatus according to any of the claims 4 to 6, characterized in that the sludge chamber (20) is formed by a upper and a lower filter area (24, 25) with a flexible seal (28) surrounding the sludge chamber (20) positioned therebetween, in that the seal (28) is fixed to an auxiliary frame (60), in that the auxiliary frame (60) movably is suspended on the upper pressure plate (22) by dogs (62) and, in that the sludge chamber (20) is having an oval contour.

8. Apparatus according to any of the claims 4 to 7, characterized in that externally the sludge chamber (20) each filter area (24, 25) is supported by bearing plates (31), having channels (75) open towards the filter area (24, 25), in that the sludge chamber (20) with the filter areas (24, 25) is inclined in the longitudinal direction, in that the inclination is corresponding to a slope of the filter areas (24, 25) of about 10 degrees and, in that the channels (75) parallel to the main axis of the sludge chamber (20) are rectilinear in the longitudinal direction.

9. Apparatus according to any of the claims 4 to 8, characterized in that the lower pressure plate (23) is supported by high pressure generators (33) by the means of which the volume of the sludge chamber (20) after reaching the hydrostatic dewatering pressure can be decreased to create an additional mechanical dewatering pressure.

10. Apparatus according to claim 9, characterized in that the lower pressure plate (23) is performed as a hydraulic bed (32) by the fact, that next to each other a number of high pressure generators (33) are distributed over the length and/or width of the lower pressure plate (23) and, in that the high pressure generators are positioned in a number of parallel rows within the oval circumference of the sludge chamber (20), wherein the high pressure generators (33) of neighbouring rows are staggered.

11. Apparatus according to claim 9, characterized in that the high pressure generators (33) are positioned laterally externally of the area of the sludge chamber (20).

12. Apparatus according to any of the claims 9 to 11, characterized in that the high pressure generators (33) are performed as hydraulic single acting cylinders.

13. Apparatus according to any of the claims 4 to 12, characterized in that the closed position of the sludge chamber (20) is mechanically lockable and in that for locking a detent apparatus (54) is provided acting on the upper pressure plate (22).

14. Apparatus according to any of the claims 4 to 13, characterized in that several sludge chambers are positioned above each other and in that for creating each a further sludge chamber an intermediate plate (33) is provided between the upper and lower pressure plate (22, 23) which is having on its top and bottom side each a bearing plate (31) and each a filter belt (65, 66), wherein further from the bottom side an auxiliary frame (60) with a seal (28) is suspended.

15. Apparatus according to any of the claims 4 to 14, characterized in that, upstream of the one or more piston-cylinder units (13, 14) a pre-dewatering apparatus (2) is provided, the sludge outlet (10) of which is connected to the sludge inlet (11) of the piston-cylinder unit (13, 14), in that the pre-dewatering apparatus (2) is performed as a compensation container (5), the inlet of which is connected to a continuous sludge feed (6) and in that the pre-dewatering apparatus (2) is having one or more filter baskets (7) submerged in the sludge of the compensation container (5), which are having a filtrate outlet (8).

16. Apparatus according to claim 15, characterized in that the filter basket (7) is stationary and in that one or more brushes (38b) are provided, reaching over the height of the filter basket (7) and which are circulating on the filtrate side of the filter basket (7).

17. Apparatus according to any of the claims 4 to 16, characterized in that between the pressure plates (22, 23) and/or the intermediate plates (63) there are provided stops (59) determining the height of the sludge chamber (20) and in that the stops (59) are compressible or resilient corresponding to the decrease of the volume of the sludge chamber (20).

18. Apparatus according to any of the claims 4 to 17, characterized in that the seal (28) is consisting of a unitary elastic body (80) surrounding the pressure chamber (20), in that the body (80) in cross-section is having the shape of a lying V, the point of which is directed away from the pressure chamber to the outside, in that the free ends (81, 82) of the V each are forming a sealing lip (83, 84) and in that in a horizontal and vertical distance from the sealing lips (83, 74) on the inside of the V there are provided two opposed bending points (85, 86) at which the angle between the limbs of the V is enlarged.

19. Apparatus according to claim 18, characterized in that the lower limb of V is parallel to the bottom of the pressure chamber (20), in that the bending points (85, 86) are asymmetrical due to the fact that the increase of the angle at the lower bending point (86) is a multiple of the increase of the angle at the upper bending point (85), in that the symmetric part of the V before the bending points (85, 86) is formed as a cut in the area of the seal (28) having a square cross-section and in that the point of the V is on the outside connected with a clamping or fixing projection (87) surrounding the seal.

## Revendications

1. Procédé de séchage de boue et de substances analogues, dans lequel la boue est injectée sous pression dans une chambre à boue fermée présentant au moins une surface de filtrage, une pression hydrostatique, étant établie dans la chambre à boue provoquant le séchage, dans lequel, une fois le séchage effectué, la chambre à boue est ouverte pour assurer l'évacuation du gâteau de filtrage constitué et les surfaces de filtrage sont sorties hors de la chambre à boue, avec le gâteau de filtrage, caractérisé en ce que la boue est introduite en au moins un récipient intermédiaire relié à la chambre à boue, en ce que les récipients intermédiaires contiennent une quantité de boue qui correspond également à peu pris au double du volume de la chambre à boue, en ce qu'ensuite l'apport de boue au récipient intermédiaire est coupé, en ce qu'ensuite la chambre à boue est remplie, par un refoulement positif, d'un volume de boue issue du récipient intermédiaire, en ce qu'après le remplissage de la chambre à boue, la pression hydrostatique est générée par un refoulement positif de la partie, dépassant le volume de la chambre à boue, du remplissage du récipient intermédiaire, et en ce que, en même temps, selon le comportement spécifique au séchage de la boue, une pression hydrostatique d'environ 5 à 10 bars est générée.

2. Procédé selon la revendication 1, caractérisé en ce que l'apport de boue au récipient intermédiaire s'effectue par l'intermédiaire d'un récipient de compensation qui est rempli en continu avec de la boue, en ce que dans le récipient de compensation est effectué un pré-séchage de la boue, et en ce que la boue est introduite dans la chambre à boue depuis plusieurs points, simultanément, à partir d'une pluralité de récipients intermédiaires correspondant au nombre de ces points.

3. Procédé selon la revendication 1 ou 2, caractérisé en ce que, après atteinte d'une pression hydrostatique susceptible d'être fixée, dans la chambre à boue, celle-ci est isolée du récipient intermédiaire, et en ce qu'ensuite le volume de la chambre à boue est diminué et il est généré une pression de séchage mécanique supérieure à la pression hydrostatique atteinte précédemment.

4. Dispositif de mise en oeuvre du procédé selon l'une des revendications précédentes, avec au moins une chambre à boue fermée de tous côtés, qui présente des surfaces de filtrage et une entrée de boue qui est reliée à un dispositif générant une pression de filtration hydrostatique, les surfaces de filtrage étant disposées entre des plaques de pressage déplaçables les unes par rapport aux autres et les surfaces de filtrage étant réalisées de façon à être déplaçables pour expulser le gâteau de filtrage après ouverture des plaques de pressage par rapport à la chambre à boue, caractérisé en ce que le dispositif de génération de la pression de filtrage hydrostatique est réalisé sous la forme d'un ou plusieurs récipients intermédiaires (3), en ce que le récipient intermédiaire (3) est réalisé sous la forme d'un ensemble à piston et cylindre (13, 14) ayant un carter de cylindre (13) et un piston (14) pouvant s'y déplacer et un entraînement (15) destiné au piston (14), chaque ensemble à piston et cylindre (13, 14) présentant une entrée de boue (11) et une sortie de boue (17) reliée à la chambre à boue (20), en ce qu'à l'entrée de boue (11) et à la sortie de boue (17) sont prévues des soupapes d'isolement et de commande (12, 21) pouvant être actionnées alternativement, et en ce que le volume du ou des récipients intermédiaires (3) correspond à peu près au double du volume de la chambre à boue (20).

5. Dispositif selon la revendication 4, caractérisé en ce que la chambre à boue (20) présente plusieurs entrées de boue (19), en ce qu'un nombre correspondant de récipients intermédiaires (3) est prévu, pour lesquels chaque entrée de boue (17) est reliée, par une conduite de liaison (18, 18') séparée, à une des entrées (19) de la chambre à boue (20), et en ce que les soupapes d'isolement et de commande (12, 21) sont réalisées sous la forme de robinets à boisseau sphérique.

6. Dispositif selon la revendication 4 ou 5, caractérisé en ce que les surfaces de filtrage (24, 25) sont constituées par des bandes de filtre (26, 27, 65, 66) déplaçables dans un sens et dans l'autre selon une ligne droite.

7. Dispositif selon l'une des revendications 4 à 6, caractérisé en ce que la chambre à boue (20) est constituée par une surface de filtrage supérieure et une surface de filtrage inférieure (24, 25), surfaces entre lesquelles est disposé un joint d'étanchéité (28) flexible entourant la chambre à boue (20), en ce que le joint d'étanchéité (28) est fixé sur un cadre auxiliaire (60), en ce que le cadre auxiliaire (60) est accroché de façon déplaçable au moyen d'organes d'entraînement (62) sur la plaque de pressage supérieure (22), et en ce que la chambre à boue (20) présente un contour ovale.

8. Dispositif selon l'une des revendications 4 à 7, caractérisé en ce qu'en dehors de la chambre à boue (20), chaque surface de filtrage (24, 25) est soutenue sur une plaque de palier (31) pourvue de canaux (75) ouverts en direction de la surface de filtrage (24, 25), en ce que la chambre à boue (20) est disposée avec les surfaces de filtrage (24, 25) inclinées dans la direction longitudinale, en ce que l'inclinaison correspond à une pente des surfaces de filtrage (24, 25) d'environ 10°, et en ce que les canaux (75) sont réalisés rectilignes en direction longitudinale, parallèlement à l'axe principal de la chambre à boue (20).

9. Dispositif selon l'une des revendications 4 à 8, caractérisé en ce que la plaque de pressage inférieure (23) est soutenue sur des générateurs haute pression (33) au moyen desquels le volume de la chambre à boue (20) peut être diminué une fois atteinte la pression de séchage hydrostatique, dans le but de générer une pression de séchage mécanique supplémentaire.

10. Dispositif selon la revendication 9, caractérisé en ce que la plaque de pressage inférieure (23) est réalisée sous la forme de lit hydraulique (32), en ce que, les uns à côté des autres, sont disposés une pluralité de générateurs haute pression (33) répartis sur la longueur et/ou la largeur de la plaque de pressage inférieure (23), et en ce que les générateurs haute pression sont disposés en plusieurs rangées parallèles à l'intérieur de la périphérie ovale de la chambre à boue (20), les générateurs haute pression (33) de rangées voisines étant décalés les uns par rapport aux autres.

11. Dispositif selon la revendication 9, caractérisé en ce que les générateurs haute pression (33) sont disposés latéralement à l'extérieur de la zone de la chambre à boue (20).

12. Dispositif selon l'une des revendications 9 à 11, caractérisé en ce que le générateur haute pression (33) est réalisé sous la forme de cylindres hydrauliques simples.

13. Dispositif selon l'une des revendications 4 à 12, caractérisé en ce que la position fermée de la chambre à boue (20) est verrouillable mécaniquement, en ce qu'un dispositif de blocage à cliquet (54) agissant sur la plaque de pressage supérieure (22) est prévue pour assurer le verrouillage.

14. Dispositif selon l'une des revendications 4 à 13, caractérisé en ce que plusieurs chambres à boue (20) sont disposées les unes au-dessus des autres et en ce que, pour constituer chaque fois une autre chambre à boue (20) entre les plaques de pressage supérieure et inférieure (22, 23), est prévue une plaque intermédiaire (63) qui présente sur ses faces supérieure et inférieure une plaque de palier (31) et chaque fois une bande de filtrage (65, 66), en outre un cadre auxiliaire (60) équipé d'un joint d'étanchéité (28) étant accroché en face inférieure.

15. Dispositif selon l'une des revendications 4 à 14, caractérisé en ce qu'avant le ou les ensembles à piston et cylindre (13, 14) est prévu un dispositif de pré-séchage (2) dont la sortie de boue (10) est reliée à l'entrée de boue (11) des ensembles à piston et cylindre (13, 14), en ce que le dispositif de pré-séchage (2) est réalisé sous la forme d'un récipient de compensation (5), dont l'entrée est raccordée à une amenée de boue continue (6), et en ce que le dispositif de pré-séchage (2) présente un ou plusieurs paniers de filtrage (7) immergé(s) dans la boue du récipient de compensation (5) et pourvu(s) d'une sortie de filtrat (8).

16. Dispositif selon la revendication 15, caractérisé en ce que le panier de filtrage (7) est disposé localement, fixe et en ce qu'une ou plusieurs brosses (38b) arrivant sur la hauteur du panier de filtrage (7) sont prévus, défilant en circulation sur le côté filtrat du panier de filtrage (7).

17. Dispositif selon l'une des revendications 4 à 16, caractérisé en ce qu'entre les plaques de pressage (22, 23) et/ou les plaques intermédiaires (63) sont prévues des butées (59) fixant la hauteur des chambres à boue (20) et en ce que les butées (59) sont réalisées de manière à pouvoir être comprimées ou à être élastiques, de manière correspondante à la diminution de volume de la chambre à boue (20).

18. Dispositif selon l'une des revendications 4 à 17, caractérisé en ce que le joint d'étanchéité (28) est constitué d'un corps élastique (80) en caoutchouc ou analogue, réalisé d'une seule pièce, entourant la périphérie de la chambre de pressage (20), en ce que le corps (80) a une section transversale ayant la forme d'un V horizontal, dont la pointe s'écarte vers l'extérieur depuis la chambre de pressage, en ce que les extrémités libres (81, 82) du V constituent chacune une lèvre d'étanchéité (83, 84) et en ce qu'à distance horizontale et verticale des lèvres d'étanchéité (83, 84) sont prévus, en face intérieure du V, deux points d'inflexion (85, 86) opposés l'un à l'autre auquel l'angle inclus entre les branches augmente.

19. Dispositif selon la revendication 18, caractérisé en ce que la branche inférieure du V s'étend parallèlement au fond de la chambre de pressage (20), en ce que les points d'inflexion (85, 86) sont réalisés asymétriques, par le fait que l'augmentation angulaire sur le point d'inflexion inférieur (86) est un multiple de l'augmentation angulaire sur le point d'inflexion inférieur (86) est un multiple de l'augmentation angulaire sur le point d'inflexion supérieur (85), en ce que la partie symétrique du V avant les points d'inflexion (85, 86) est réalisée sous la forme d'entaille dans une zone du joint d'étanchéité (28) ayant une section transversale rectangulaire et en ce que la pointe du V est reliée extérieurement à une saillie d'enserrement ou de fixation (87) faisant le pourtour.
